# EUROPÄISCHE PATENTSCHRIFT

(11) **EP 4 058 499 B1**
(45) Veröffentlichungstag und Bekanntmachung des Hinweises auf die Patenterteilung: **04.12.2024**
(21) Anmeldenummer: 20800676.7
(22) Anmeldetag: 09.11.2020
(51) Int. Cl.: C08G 18/61, C08G 18/10, C08G 18/24, C08G 18/28, C08G 18/32, C08G 18/42, C08G 18/62, C08G 18/65, C08G 18/72, C08G 18/73, C08G 18/75, C08G 18/78, C08G 18/79, C09D 5/02, C09D 175/04, C09D 175/06, C09D 183/10, C08G 77/26, C08G 77/458, C08L 83/10

(54) **POLYSILOXAN-FUNKTIONALISIERTE POLYURETHANE ZUR STEIGERUNG DER HYDROPHOBIE VON OBERFLÄCHEN**
POLYSILOXANE FUNCTIONALIZED POLYURETHANES FOR ENHANCING HYDROPHOBISATION OF SURFACES
POLYURÉTHANES FONCTIONNALISÉS PAR POLYSILOXANE PERMETTANT D'AUGMENTER L'HYDROPHOBIE DES SURFACES

(30) Priorität: 15.11.2019 EP 19209291
(43) Veröffentlichungstag der Anmeldung: 21.09.2022
(73) Patentinhaber: Covestro Deutschland AG, 51373 Leverkusen (DE)
(72) Erfinder: GOLLING, Florian, 40237 Düsseldorf (DE); HECKING, Andreas, 40764 Langenfeld (DE); DER, Nadine, 40789 Monheim (DE); MAGER, Dieter, 51373 Leverkusen (DE)
(74) Vertreter: Levpat
(86) Internationale Anmeldenummer: PCT/EP2020/081411
(87) Internationale Veröffentlichungsnummer: WO 2021/094229

(56) Entgegenhaltungen:
- CN-A- 105 367 732
- CN-A- 108 586 703
- US-A1- 2015 307 745
- SILTECH CORPORATION: "Silmer NCO Di-50 - Isocyanate Functional Pre-Polymer", 1 October 2008 (2008-10-01), Toronto, Ontario, Canada, M4H 1G5, XP055766306, Retrieved from the Internet <URL:https://www.siltech.com/wp-content/uploads/2017/11/TP5761.pdf> [retrieved on 20210118]

## Beschreibung

Die vorliegende Erfindung betrifft ein NCO-terminiertes Polysiloxanprepolymer, ein Verfahren zu dessen Herstellung, eine Formulierung enthaltend das NCO-terminierte Polysiloxanprepolymer und die Verwendung dieses NCO-terminierten Polysiloxanprepolymer in einer Lackformulierung.

Es ist bekannt, dass NCO-terminierte Prepolymere als härtende Komponenten in Polyurethan-Lack- oder Beschichtungssystemen eingesetzt werden können. Diese Prepolymere werden im Allgemeinen durch Umsetzung von Polyolen mit Di- oder Polyisocyanaten erhalten. Als härtende Komponente reagieren die Prepolymere dann im Lack- bzw. Beschichtungssystem mit weiteren Polyolen, beispielsweise mit Polyacrylatpolyolen, zu den entsprechenden Polyurethanen. Es ist dabei wünschenswert, dass die Oberflächen dieser Beschichtungsmaterialien hydrophobe Eigenschaften aufweisen, beispielsweise um die Anhaftung von Wasser und/oder Schmutz zu minimieren.

Aus dem Stand der Technik ist es bereits bekannt, Siloxan-Einheiten in die Beschichtungsmaterialien einzubringen, um so die Hydrophobizität der entsprechenden Oberfläche zu erhöhen.

In der Schrift WO 2018/146016 A1 werden Copolymere beschrieben, die mindestens drei Baueinheiten enthalten, zum einen eine Komponente, die mindestens eine Biuret- oder Isocyanurat-Teilstruktur aufweist, ein Polysiloxan als weitere Komponente und als dritte Komponente einen weiteren Kohlenwasserstoff mit mindestens sechs Kohlenstoffatomen, der zu der zweiten Komponente unterschiedlich ist. Die Copolymere werden dazu verwendet, Textilien hydrophob auszurüsten.

WO 2017/151621 A1 offenbart nicht-isocyanat funktionalisierte, siloxan-modifizierte Glycidyl-Carbamate zur Verwendung in Beschichtungsmaterialien. Die Gycidyl-Carbamate werden durch Umsetzung von organischen Polyisocyanaten, Glycidol, und wenigstens einem bis(hydroxylalkyl)-terminierten Polydimethylsiloxan erhalten.

In der Schrift US 2008/0213599 A1 wird ein polymeres Material beschrieben, welches durch Umsetzung einer Mischung enthaltend aminofunktionelle Polyorganosiloxane, Polyisocyanate und Polyole erhalten wird. Dieses Material kann als Antifouling-Beschichtungsmittel eingesetzt werden.

US 2014/0275410 A1 offenbart ein isocyanat-terminiertes Polysiloxan-Copolymer, welches als Härter oder Co-Reaktant in Beschichtungsmaterialien eingesetzt werden kann. Zur Herstellung dieses Copolymers wird ein methoxy-funktionalisiertes Polysiloxan wie beispielsweise Methylphenyl-Polysiloxan, mit einem Polyisocyanat umgesetzt, um das gewünschte Copolymer zu erhalten. In Beschichtungsmaterialien reagiert dieses Copolymer dann mit isocyanat-reaktiven Gruppen zu entsprechenden Polyurethanen.

WO 2014/149331 A1 betrifft ebenfalls ein isocyanat-terminiertes Polysiloxan, welches als Härtungsmittel in Beschichtungssystemen eingesetzt werden kann. Zur Herstellung dieses Polysiloxans wird ebenfalls ein methoxy-funktionalisiertes Polysiloxan hydrolysiert und anschließend mit einem Polyisocyanat umgesetzt.

US 2015/307745 A1 betrifft feuchtigkeitshärtende Beschichtungen welche als Antifouling-Beschichtungen zum Einsatz kommen und daher eine Oberflächenhydrophobizität aufweisen.

Bei den aus dem Stand der Technik bekannten Systemen ist die Verträglichkeit der Siloxan-Baueinheiten im Lacksystem teilweise zu verbessern. Ein weiteres Problem stellt die Anreicherung von Siloxanketten an der Oberfläche der Beschichtung dar. Liegen die Siloxanketten größtenteils an der Oberfläche der Beschichtung vor, kann der Kontakt mit Wasser und das Verkratzen der Oberfläche zum Abtragen der Siloxanschicht führen, so dass die durch Siloxanketten gewünschte Hydrophobisierung der Oberfläche verloren geht. Die vorhandenen Polysiloxanbausteine sollten daher eine genügend hohe Anbindung an die Matrix aufweisen. Darüber hinaus kann die Stärke der Oberflächenhydrophobisierung an sich noch gesteigert werden.

Aufgabe der vorliegenden Erfindung ist es daher, einen Polysiloxan-basierten Härter für ein Beschichtungsmaterial auf Polyurethan-Basis herzustellen, das eine größere Oberflächenhydrophobizität aufweist als aus dem Stand der Technik bekannte Beschichtungen. Zudem soll diese Hydrophobizität nicht durch Verkratzung der Oberfläche oder die Einwirkung von Wasser auf die Oberfläche beeinflusst werden. Eine weitere Aufgabe der vorliegenden Erfindung ist es daher, entsprechend geeignete Polysiloxan-Bausteine für den Einsatz als Härter in Beschichtungsmaterialien bereitzustellen, die eine besonders hohe Kompatibilität und Anbindung mit der Matrix aufweisen.

Dies Aufgaben werden erfindungsgemäß gelöst durch das NCO-terminierte Polysiloxanprepolymer der allgemeinen Formel (I)

[(Q)_{q}]-[(M)ₘ-(P)ₚ-(R)ᵣ]ₜ (I),

worin R, P, M, Q, r, p, m, q und t die folgenden Bedeutungen haben
- R: jeweils unabhängig voneinander mindestens eine Polyisocyanat-Einheit und/oder mindestens eine Diisocyanat-Einheit,
- P: jeweils unabhängig voneinander mindestens eine Polyol-Einheit,
- M: jeweils unabhängig voneinander mindestens eine Diisocyanat-Einheit und/oder mindestens eine Polyisocyanat-Einheit,
- Q: mindestens eine Polysiloxan-Einheit,
- r: jeweils unabhängig voneinander Zahl von 1 bis 10,
- p: jeweils unabhängig voneinander Zahl von 1 bis 10,
- m: jeweils unabhängig voneinander Zahl von 1 bis 10,
- q: jeweils unabhängig voneinander Zahl von 1 bis 10,
- t: ganze Zahl von 2 bis 5, und
die vorhandenen Einheiten M direkt an die Einheit Q angebunden sind.

Die genannten Aufgaben werden des Weiteren gelöst durch ein Verfahren zur Herstellung eines erfindungsgemäßen NCO-terminierten Polysiloxanprepolymers, mindestens umfassend die folgenden Schritte:
(A) Umsetzung mindestens eines Polysiloxanpolyols mit mindestens einem Diisocyanat und/oder mindestens einem Polyisocyanat, um mindestens ein NCO-terminiertes Polysiloxan zu erhalten,
(B) gegebenenfalls Entfernen von überschüssigem mindestens einen Diisocyanat oder mindestens einen Polyisocyanat,
(C) Umsetzung des mindestens einen NCO-terminierten Polysiloxans aus Schritt (A) oder (B) mit mindestens einem Polyol,
(D) Umsetzung des in Schritt (C) erhaltenen Produkts mit mindestens einem Polyisocyanat oder mindestens einem Diisocyanat, um das NCO-terminierte Polysiloxanprepolymer zu erhalten,
sowie durch die erfindungsgemäße Formulierung enthaltend mindestens ein erfindungsgemäßes NCO-terminiertes Polysiloxanprepolymer, und durch die Verwendung des erfindungsgemäßen NCO-terminierten Polysiloxanprepolymers als Härter in einer Lackformulierung.

Die vorliegende Erfindung wird im Folgenden detailliert beschrieben.

Die vorliegende Erfindung betrifft das NCO-terminiertes Polysiloxanprepolymer der allgemeinen Formel (I)

[(Q)_{q}]-[(M)ₘ-(P)ₚ-(R)ᵣ]t (I),

worin R, P, M, Q, r, p, m, q und t die oben genannten Bedeutungen haben.

Das erfindungsgemäße Prepolymer der allgemeinen Formel (I) ist NCO-terminiert. Im Rahmen der vorliegenden Erfindung bedeutet "NCO-terminiert", dass bevorzugt 2 bis 24 Gew.-%, besonders bevorzugt 4 bis 15 Gew.-%, ganz besonders bevorzugt 5 bis 12 Gew.-%, der endständig vorliegenden funktionellen Gruppen Isocyanat-Gruppen, d.h. NCO-Gruppen, sind.

Das erfindungsgemäße Prepolymer der allgemeinen Formel (I) kann im Prinzip jedes dem Fachmann bekannte Molgewicht aufweisen. In einer bevorzugten Ausführungsform der vorliegenden Erfindung beträgt das zahlengewichtete Molgewicht Mn des erfindungsgemäßen Prepolymers 445 bis 8500 g/mol, besonders bevorzugt 550 bis 6000 g/mol, ganz besonders bevorzugt 600 bis 5500 g/mol.

In einer bevorzugten Ausführungsform der vorliegenden Erfindung beträgt der Verzweigungsgrad des erfindungsgemäßen Prepolymers 2 bis 14, besonders bevorzugt 3 bis 12, ganz besonders bevorzugt 4 bis 10.

In der allgemeinen Formel (I) haben R, P, M, Q, r, p, m, q und t insbesondere die folgenden Bedeutungen.

M bedeutet in der allgemeinen Formel (I) jeweils unabhängig voneinander mindestens eine Diisocyanat-Einheit und/oder mindestens eine Polyisocyanat-Einheit. Erfindungsgemäß sind die jeweils vorhandenen Einheiten M direkt an die Einheit Q angebunden. Erfindungsgemäß ist es möglich, dass an die Polysiloxan-Einheit Q 2 bis 5 Diisocyanat- und/oder Polyisocyanat-Einheiten M, bevorzugt 2, 3, 4 oder 5 Diisocyanat- und/oder Polyisocyanat-Einheiten M, angebunden sind. In einer ganz besonders bevorzugten Ausführungsform sind an die Polysiloxan-Einheit Q zwei Diisocyanat- und/oder Polyisocyanat-Einheiten M angebunden.

Erfindungsgemäß besonders bevorzugt bedeutet in der allgemeinen Formel (I) M jeweils unabhängig voneinander mindestens eine Diisocyanat-Einheit, d.h. an der Polysiloxan-Einheit Q liegen 2 bis 5, bevorzugt 2, 3, 4 oder 5, ganz besonders bevorzugt 2, Diisocyanat-Einheiten M vor. Diese können erfindungsgemäß gleich oder unterschiedlich sein, bevorzugt sind die an die Polysiloxan-Einheit Q angebundenen Diisocyanat-Einheiten M gleich.

Im Rahmen der vorliegenden Erfindung bedeutet "Einheit", dass die in der Verbindung der allgemeinen Formel (I) vorliegende Struktureinheit von den - im Folgenden beschriebenen - reaktiven Verbindungen abgeleitet ist. Wird beispielsweise ein Diisocyanat mit einem Diol oder Polyol umgesetzt, so bildet sich aus jeweils einer Isocyanat-Gruppe und einer Hydroxy-Gruppe eine Urethan-Gruppe. Der Rest der eingesetzten Verbindungen, beispielsweise die sechs Methylengruppen von Hexamethylendiisocyanat, bleiben aber unverändert bestehen. Unter "Einheit" im Rahmen der vorliegenden Erfindung werden demnach sowohl die Teile der Verbindungen verstanden, die nicht an der Reaktion beteiligt sind, als auch die funktionellen Gruppen, beispielsweise eine Urethangruppe, die durch die Reaktion gebildet werden. Im Rahmen der vorliegenden Erfindung ist die entsprechende Einheit immer von den in die Synthese eingesetzten Verbindungen abgeleitet.

"Jeweils unabhängig" bedeutet im Rahmen der vorliegenden Erfindung, dass, falls in der allgemeinen Formel (I) die entsprechende Einheit mehrfach vorkommt, die Einheiten gleich oder unterschiedlich und jeweils ausgewählt aus der Gruppe der jeweils möglichen Einheiten ausgewählt sind. Es ist erfindungsgemäß auch möglich, dass eine Mischung von Verbindungen der allgemeinen Formel (I) vorliegt, wobei in den einzelnen Molekülen verschiedene der möglichen Einheiten vorliegen.

Die mindestens eine Diisocyanat-Einheit M leitet sich erfindungsgemäß bevorzugt von einem Diisocyanat ab. Als Einheit M eingesetzte Diisocyanate sind bevorzugt ausgewählt aus der Gruppe bestehend aus organischen aliphatischen, cycloaliphatischen, araliphatischen, aromatischen Diisocyanaten und Mischungen davon. Bevorzugt werden als Einheit M aliphatische und/oder cycloaliphatische Diisocyanate eingesetzt.

Insbesondere bevorzugt werden erfindungsgemäß als Einheit M Diisocyanate eingesetzt, ausgewählt aus der Gruppe bestehend aus 1,4-Butandiisocyanat, 1,5-Pentandiisocyanat (Pentamethylendiisocyanat, PDI), 1,6-Hexandiisocyanat (Hexamethylendiisocyanat, HDI), 4,4'-Methylenbis(cyclohexylisocyanat) (H12MDI), 3,5,5-Tri-methyl-1-isocyanato-3-isocyanatomethylcyclohexan (Isophorondiisocyanat, IPDI), 1,3- sowie 1,4-Bis(isocyanatomethyl)cyclohexan (H6XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3- und/oder 1,4-Bis(isocyanatomethyl)benzol (XDI), 3,3'-Dimethyl-4,4'-biphenyldiisocyanat (TODI), 1,4-Paraphenylendiisocyanat (PPDI) sowie Cyclohexyldiisocyanat (CHDI) und Mischungen davon.

Ganz besonders bevorzugt ist das erfindungsgemäß als Einheit M vorliegende Diisocyanat ausgewählt aus der Gruppe bestehend aus 1,6-Hexandiisocyanat (Hexamethylendiisocyanat, HDI), 1,5-Pentandiisocyanat (Pentamethylendiisocyanat, PDI), 3,5,5-Tri-methyl-1-isocyanato-3-isocyanatomethylcyclohexan (Isophorondiisocyanat, IPDI), 4,4'-Methylenbis(cyclohexylisocyanat) (H12MDI) und Mischungen davon.

In einer weniger bevorzugten erfindungsgemäßen Ausführungsform bedeutet in der allgemeinen Formel (I) M mindestens eine Polyisocyanat-Einheit. Das dafür eingesetzte Polyisocyanat kann ausgewählt sein aus der Gruppe bestehend aus aliphatischen, cycloaliphatischen, araliphatischen, aromatischen Polyisocyanaten und Mischungen davon.

Beispiele für als Einheit M vorliegende Polyisocyanate sind ausgewählt aus der Gruppe bestehend aus Triisocyanaten wie 3,5,5-Tri-methyl-1-isocyanato-3-isocyanatomethylcyclohexan oder höhermolekularen Oligomeren mit Biuret-, Uretdion-, Isocyanurat-, Iminooxadiazindion-, Allophanat-, Urethan- und/oder Carbodiimid/Uretonimin-Struktureinheiten erhältlich durch Umsetzung von Di- oder Triisocyanaten ausgewählt aus der Gruppe bestehend aus 1,4-Butandiisocyanat, 1,5-Pentandiisocyanat (Pentamethylendiisocyanat, PDI), 1,6-Hexandiisocyanat (Hexamethylendiisocyanat, HDI), 4-Isocyanatomethyl-1,8-octandiisocyanat (Triisocyanatononan, TIN), 4,4'-Methylenbis(cyclohexylisocyanat) (H12MDI), 3,5,5-Tri-methyl-1-isocyanato-3-isocyanatomethylcyclohexan (Isophorondiisocyanat, IPDI), 1,3- sowie 1,4-Bis(isocyanatomethyl)cyclohexan (H6XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3- und/oder 1,4-Bis(isocyanatomethyl)benzol (XDI), 3,3'-Dimethyl-4,4'-biphenyldiisocyanat (TODI), 1,4-Paraphenylendiisocyanat (PPDI), Cyclohexyldiisocyanat (CHDI) und Mischungen davon.

In der Verbindung der allgemeinen Formel (I) bedeutet P jeweils unabhängig voneinander mindestens eine Polyol-Einheit. Die mindestens eine Polyol-Einheit leitet sich erfindungsgemäß bevorzugt von einem Polyol ab.

Erfindungsgemäß können polymere Polyole oder niedermolekulare Polyole vorliegen.

Als Polyole P können erfindungsgemäß Verbindungen eingesetzt werden, die mindestens eine Zerewitinoff-aktive Gruppe, beispielsweise eine Hydroxy- oder eine Thiol-Gruppe, enthalten.

Erfindungsgemäß besonders bevorzugte Polyole P weisen eine mittlere OH- bzw. SH-Funktionalität von mindestens 1,5 auf.

Erfindungsgemäß bevorzugte Polyole P sind ausgewählt aus der Gruppe bestehend aus Diolen, Triolen, Tetraolen, Polyhxdroxyverbindungen und Mischungen davon.

Ganz besonders als Einheit P bevorzugte Polyole sind ausgewählt aus der Gruppe bestehend aus 1,2-Ethandiol, 1,3-Propandiol, 1,2-Propandiol, 1,4-Butandiol, Glycerin, Trimethylolpropan, Pentaerythrit, Polyhydroxyverbindungen und Mischungen davon.

Erfindungsgemäß bevorzugt sind Polyole P ausgewählt aus der Gruppe bestehend aus Polyetherpolyolen, Polyesterpolyolen, Polyurethanpolyolen, Polysiloxanpolyolen, Polycarbonatpolyolen, Polybutadienpolyolen, Polyacrylatpolyolen, Polymethacrylatpolyolen, Mischpolymerisaten von Polyacrylatpolyolen und Polymethacrylatpolyolen und Mischungen davon.

In einer bevorzugten Ausführungsform ist das mindestens eine Polyol P ein polymeres Polyol, insbesondere eine Polyhydroxy-Verbindung. Die Polyhydroxy-Verbindungen weisen bevorzugt gewichtsmittlere Molekulargewichte Mw von größer 500 g/mol, besonders bevorzugt 800 bis 100.000 g/mol, insbesondere 1.000 bis 50.000 g/mol, auf, jeweils gemessen mittels Gelpermeationschromatographie (GPC) gegen einen Polystyrolstandard.

Die Polyhydroxy-Verbindungen weisen bevorzugt eine OH-Zahl von 30 bis 400 mg KOH/g, insbesondere von 100 bis 300 KOH/g, auf. Die Hydroxylzahl (OH-Zahl) gibt an, wie viel mg Kaliumhydroxid der Essigsäuremenge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2 2:2007-11).

Die Glasübergangstemperaturen, gemessen mit Hilfe von DSC-Messungen nach DIN-EN- ISO 11357-2-2:2014-07, der erfindungsgemäß bevorzugten Polyhydroxy-Verbindungen liegen bevorzugt bei -150 bis 100 °C, besonders bevorzugt bei -120 bis 80 °C.

Erfindungsgemäß bevorzugt ist das mindestens eine Polyol P ausgewählt aus der Gruppe bestehend aus Polyetherpolyolen, Polyesterpolyolen, Polyurethanpolyolen, Polysiloxanpolyolen, Polyacrylatpolyolen und Mischungen davon.

Die erfindungsgemäß bevorzugt eingesetzten Polyetherpolyole sind in an sich bekannter Weise durch Alkoxylierung von geeigneten Starter-Molekülen unter Basenkatalyse oder Einsatz von Doppelmetallcyanid-Verbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei NH-Bindungen oder beliebige Gemische derartiger Starter-Moleküle.

Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3, Butandiol-1,4, Hexandiol-1,6, Neopentylglykol, 2- Ethylhexandiol-1,3, Glyzerin, Trimethylolpropan, Pentaerythrit sowie niedermolekulare, Hydroxylgruppen aufweisende Ester derartiger Polyole mit Dicarbonsäuren der weiter unten genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Erfindungsgemäß geeignete Polyesterpolyole sind beispielsweise in EP-A-0 994 1 17 und EP-A-1 273 640 beschrieben. Polyesterpolyole können in bekannter Weise durch Polykondensation von niedermolekularen Polycarbonsäurederivaten, beispielsweise Bernsteinsäure, Adipinsäure, Korksäure, Azelainsäure, Sebacinsäure, Dodekandisäure, Tetrahydrophthalsäureanhydrid, Hexahydrophthal-säureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Teträthylenglykol, Polyethylenglykol, Dipropylenglykol, Polypropylenglykol, Dibutylenglykol und Polybutylenglykol, oder durch ringöffnende Polymerisation cyclischer Carbonsäureester wie epsilon-Caprolacton hergestellt werden. Darüber hinaus lassen sich auch Hydroxycarbonsäurederivate, wie beispielsweise Milchsäure, Zimtsäure oder Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Erfindungsgemäß geeignete Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 und EP-A-0 148 329 beschrieben. Bevorzugt werden Polyurethanpolyole, zu deren Herstellung HDI, PDI, IPDI oder H12MDI verwendet werden. Das zahlenmittlere Molgewicht beträgt vorzugsweise 500 bis 2000 g/mol, die mittlere Funktionalität 2,0 bis 3,5. Beispiele für geeignete Polyesterpolyole und geeignete Polyisocyanate sind jeweils oben genannt.

Erfindungsgemäß als Polyol-Komponente P geeignete Polysiloxanpolyole sind beispielsweise in der WO-A-01/09260 beschrieben, wobei die dort angeführten Polysiloxanpolyole bevorzugt in Kombination mit weiteren Polyhydroxyverbindungen, insbesondere solchen mit höheren Glasübergangstemperaturen, zum Einsatz kommen können.

Die erfindungsgemäß ganz besonders bevorzugten Polyacrylatpolyole sind in der Regel Copolymerisate von Acrylsäure und/oder Methacrylsäure mit Hydoxygruppen aufweisenden olefinisch ungesättigten Monomeren und weisen vorzugsweise gewichtsmittlere Molekulargewichte Mw von 270 bis 22.000 g/mol, bevorzugt von 500 bis 18.000 g/mol, besonders bevorzugt von 800 bis 12000, auf, jeweils gemessen mittels Gelpermeationschromatographie (GPC) gegen einen Polystyrolstandard. Die Glasübergangstemperatur dieser Copolymerisate liegt in der Regel bei -100 bis 100 °C, insbesondere bei -50 bis 80 °C, jeweils gemessen mittels DSC-Messungen nach DIN-EN- ISO 11357-2-2:2014-07.

Bevorzugte Poly(meth)acrylatpolyole weisen eine OH-Zahl von 60 bis 250 mg KOH/g, insbesondere von 70 bis 200 mg KOH/g, sowie eine Säurezahl von 0 bis 30 mg KOH/g, auf. Die Säurezahl gibt hierbei die Anzahl der mg Kaliumhydroxid an, die zur Neutralisation von 1 g der jeweiligen Verbindung verbraucht wird (DIN EN ISO 2114:2002-06).

Die Herstellung geeigneter Poly(meth)acrylatpolyole ist dem Fachmann an sich bekannt. Sie werden durch radikalische Polymerisation von Acrylsäure und/oder Methacrylsäure mit Hydroxygruppen aufweisenden, olefinisch ungesättigten Monomeren und gegebenenfalls anderen olefinisch ungesättigten Monomeren erhalten. Geeignete olefinisch ungesättigte Verbindungen sind z.B. Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat erhalten.

Geeignete Hydroxylgruppen aufweisende, olefinisch ungesättigte Monomere sind insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Erfindungsgemäß bevorzugte niedermolekulare Polyole P sind beispielsweise von einem mehrwertigen Alkohol und/oder Ether- oder Esteralkohol, der 2 bis 14 Kohlenstoffatome, bevorzugt 4 bis 10 Kohlenstoffatome enthält, abgeleitet.

Bevorzugt sind die erfindungsgemäß geeigneten niedermolekularen Polyole P ausgewählt aus der Gruppe bestehend aus 1,2-Ethandiol, 1,2-Propandiol, 1,3-Propandiol, den isomeren Butandiolen, Pentandiolen, Hexandiolen, Heptandiolen, Octandiolen, 1,10-Decandiol, 1,12-Dodecandiol, 1,2-Cyclohexandiol, 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydrobisphenol), 1,2,3-Propantriol, 1,2,4-Butantriol, 1,1,1-Trimethylolethan, 1,2,6-Hexantriol, 1,1,1-Trimethylolpropan (TMP), Bis-(2-hydroxyethyl)-hydrochinon, 1,2,4-Trihydroxycyclohexan, 1,3,5-Trihydroxycyclohexan, 1,3,5-Tris(2-hydroxyethyl)-isocyanurat, Bis(hydroxymethyl)-tricyclo[5.2.1.02,6]-decan, 4,8-Bis(hydroxymethyl)tricyclo-[5.2.1.02,6]-decan, 5,8-Bis(hydroxymethyl)-tricyclo-[5.2.1.0(2,6)], Di-trimethylolpropan, 2,2-Bis(hydroxymethyl)-1,3-propandiol (Pentaerythrit), 2,2,6,6-Tetrakis(hydroxymethyl)-4-oxa-heptan-1,7-diol (Dipentaerythrit), Mannitol oder Sorbitol, niedermolekularen Etheralkoholen, wie Diethylenglykol, Triethylenglykol, Tetraethylenglykol, Dipropylenglykol oder Dibutylenglykol, niedermolekularen Esteralkoholen, wie Hydroxypivalinsaureneopentylglykolester, und Mischungen davon.

Erfindungsgemäß ganz besonders bevorzugte Polyole P sind ausgewählt aus der Gruppe bestehend aus 1,1,1-Trimethylolpropan (TMP), einem Polyester aufgebaut aus 1,6-Hexandiol, Neopentylgylkol, 1,4-Butandiol, Adipinsäure, 2,2,4-Trimethyl-1,3-pentandiol, 2-Butyl-2-ethyl-1,3-propandiol, oder einem Polyacrylatpolyol aufgebaut aus Styrol, 1-Decen, Methacrylsäuremethylester, Acrylsäure, Hydroxyethylmetha-crylsäureester, hydrophobem Vinylester und Mischungen davon.

R bedeutet in der allgemeinen Formel (I) jeweils unabhängig voneinander mindestens eine Polyisocyanat-Einheit und/oder mindestens eine Diisocyanat-Einheiten.

Erfindungsgemäß liegt in der Verbindung der allgemeinen Formel (I) als Einheit R bevorzugt mindestens eine Polyisocyanat-Einheit vor.

Die mindestens eine Polyisocyanat-Einheit R leitet sich erfindungsgemäß bevorzugt von einem Polyisocyanat ab. Bevorzugt ist das mindestens eine Polyisocyanat ausgewählt aus der Gruppe bestehend aus aliphatischen, cycloaliphatischen, araliphatischen, aromatischen Polyisocyanaten und Mischungen davon.

Besonders bevorzugt werden erfindungsgemäß bevorzugt Polyisocyanate als Einheit R eingesetzt ausgewählt aus der Gruppe bestehend aus Triisocyanaten wie 3,5,5-Tri-methyl-1-isocyanato-3-isocyanatomethylcyclohexan oder, bevorzugt höhermolekularen, Oligomeren mit Biuret-, Uretdion-, Isocyanurat-, Iminooxadiazindion-, Allophanat-, Urethan- und/oder Carbodiimid/Uretonimin-Struktureinheiten erhältlich durch Umsetzung von Di- oder Triisocyanaten ausgewählt aus der Gruppe bestehend aus 1,4-Butandiisocyanat, 1,5-Pentandiisocyanat (Pentamethylendiisocyanat, PDI), 1,6-Hexandiisocyanat (Hexamethylendiisocyanat, HDI), 4-Isocyanatomethyl-1,8-octandiisocyanat (Triisocyanatononan, TIN), 4,4'-Methylenbis(cyclohexylisocyanat) (H12MDI), 3,5,5-Tri-methyl-1-isocyanato-3-isocyanatomethylcyclohexan (Isophorondiisocyanat, IPDI), 1,3- sowie 1,4-Bis(isocyanatomethyl)cyclohexan (H6XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3- und/oder 1,4-Bis(isocyanatomethyl)benzol (XDI), 3,3'-Dimethyl-4,4'-biphenyldiisocyanat (TODI), 1,4-Paraphenylendiisocyanat (PPDI), Cyclohexyldiisocyanat (CHDI) und Mischungen davon.

Ganz besonders bevorzugt ist das erfindungsgemäß als Einheit R eingesetzte Polyisocyanat ausgewählt aus der Gruppe bestehend aus, bevorzugt höhermolekularen, Oligomeren mit Biuret-, Uretdion-, Isocyanurat-, Iminooxadiazindion-, Allophanat-, Urethan- und/oder Carbodiimid/Uretonimin-Struktureinheiten erhältlich durch Umsetzung von Di- oder Triisocyanaten ausgewählt aus der Gruppe bestehend aus 1,5-Pentandiisocyanat (Pentamethylendiisocyanat, PDI), 1,6-Hexandiisocyanat (Hexamethylendiisocyanat, HDI), 4,4'-Methylenbis(cyclohexylisocyanat) (H12MDI), 3,5,5-Tri-methyl-1-isocyanato-3-isocyanatomethylcyclohexan (Isophorondiisocyanat, IPDI), Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren und Mischungen davon.

In einer weniger bevorzugten Ausführungsform der vorliegenden Erfindung werden als Einheit R solche abgeleitet von Diisocyanaten eingesetzt. Diese sind beispielsweise ausgewählt aus der Gruppe bestehend aus organischen aliphatischen, cycloaliphatischen, araliphatischen, aromatischen Diisocyanaten und Mischungen davon.

Beispiele für als Einheit R eingesetzten Diisocyanate sind ausgewählt aus der Gruppe bestehend aus 1,4-Butandiisocyanat, 1,5-Pentandiisocyanat (Pentamethylendiisocyanat, PDI), 1,6-Hexandiisocyanat (Hexamethylendiisocyanat, HDI), 4,4'-Methylenbis(cyclohexylisocyanat) (H12MDI), 3,5,5-Tri-methyl-1-isocyanato-3-isocyanatomethylcyclohexan (Isophorondiisocyanat, IPDI), 1,3- sowie 1,4-Bis(isocyanatomethyl)cyclohexan (H6XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3- und/oder 1,4-Bis(isocyanatomethyl)benzol (XDI), 3,3'-Dimethyl-4,4'-biphenyldiisocyanat (TODI), 1,4-Paraphenylendiisocyanat (PPDI) sowie Cyclohexyldiisocyanat (CHDI) und Mischungen davon.

In der allgemeinen Formel (I) bedeutet Q mindestens eine Polysiloxan-Einheit. Erfindungsgemäß bevorzugt leitet sich die in der Verbindung der allgemeinen Formel (I) vorliegende mindestens eine Polysiloxan-Einheit Q von einem Polysiloxanpolyol, einem Polysiloxanpolyamin oder einem Polysiloxanpolythiol, insbesondere einem Polysiloxanpolyol, ab.

Erfindungsgemäß können im Prinzip alle dem Fachmann bekannten Polysiloxanpolyole, Polysiloxanpolyamine oder Polysiloxanpolythiole eingesetzt werden, um in der Verbindung der allgemeinen Formel (I) entsprechende Polysiloxan-Einheiten zu ergeben.

In einer bevorzugten Ausführungsform der vorliegenden Erfindung basieren die vorliegenden Polysiloxan-Einheiten Q auf Verbindungen der allgemeinen Formel (11) 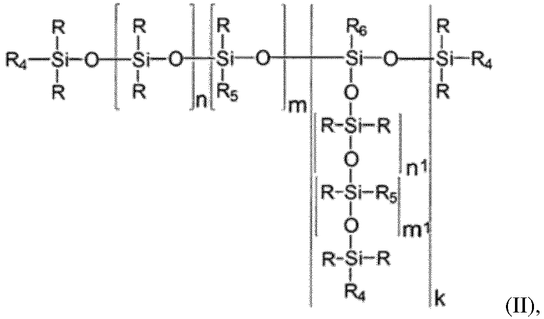 wobei
R, R₄, R₅, R₆, n, n¹, m, m¹ und k die folgenden Bedeutungen haben:
- n und n¹: unabhängig voneinander 0 oder größer 0, bevorzugt 10 bis 200, besonders bevorzugt 15 bis 100 sind und (n+n¹) kleiner 500, bevorzugt kleiner 200, besonders bevorzugt kleiner 100,
- m und m¹: unabhängig voneinander 0 oder größer 0, bevorzugt 0 bis 30, besonders bevorzugt 0,1 bis 25 sind und (m+m¹) kleiner 60, bevorzugt kleiner 30, besonders bevorzugt kleiner 25,
- k: 0 bis 10, bevorzugt 0 bis 5, beispielsweise 0, 1, 2, 3, 4, oder 5,
- R: mindestens ein Rest ausgewählt aus der Gruppe bestehend aus linearen, cyclischen oder verzweigten, aliphatischen oder aromatischen, gesättigten oder ungesättigten Kohlenstoffresten mit 1 bis 20 C-Atomen und gegebenenfalls Heteroatomen ausgewählt aus der Gruppe bestehend aus O, P, S, N, jeweils gegebenenfalls mit einer funktionellen Gruppe ausgewählt aus der Halogen-, Hydroxy-, Amin-, Mercapto-, Carboxy-, Alkoxy-, Epoxy-, Alkylalkoxysilylalkyl- oder Alkoxysilylalkyl-Gruppe, insbesondere Methyl,
- R₄, R₅, R₆: mindestens ein Rest ausgewählt aus der Gruppe bestehend aus linearen, cyclischen oder verzweigten, aliphatischen oder aromatischen, gesättigten oder ungesättigten Kohlenstoffresten mit 1 bis 20 C-Atomen und gegebenenfalls Heteroatomen ausgewählt aus der Gruppe bestehend aus O, P, S, N, jeweils gegebenenfalls mit einer funktionellen Gruppe ausgewählt aus der Halogen-, Hydroxy-, Amin-, Mercapto-, Carboxy-, Alkoxy-, Epoxy-, Alkylalkoxysilylalkyl- oder Alkoxysilylalkyl-Gruppe, -(CH₂)_{x"}-O-(CH₂-CH₂O-)ₓ-(CH₂-CH(R')O-)_{y-}(SO)_{z}-R", worin
- x: 0 bis 100, bevorzugt 1 bis 5,
- x": 0 bis 100, bevorzugt 1 bis 4,
- y: 0 bis 100, bevorzugt 1 bis 5,
- z: 0 bis 100, bevorzugt 0 bis 1,
- R': eine gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen ist, und
- R": einen Wasserstoffrest oder eine Alkylgruppe mit 1 bis 4 C-Atomen, eine Gruppe-C(O)-R‴ mit R‴ = Alkylrest, eine Gruppe -CH₂-O-R', eine Alkylarylgruppe oder eine Gruppe -C(O)NH-R' bedeutet,
- SO: ein Styroloxid-Rest -CH(C₆H₅)-CH₂-O- ist,
wobei mindestens zwei, bevorzugt 2 bis 5, besonders bevorzugt 2, Reste ausgewählt aus R, R₄, R₅ und/oder R₆ mindestens eine Hydroxy-, Amin- und/oder Thiol-Gruppe, bevorzugt mindestens eine Hydroxy-Gruppe, tragen.

In den Verbindungen der der allgemeinen Formel (II) können die verschiedenen Monomereinheiten der Siloxankette und/oder der Polyoxyalkylenkette untereinander blockweise aufgebaut sein oder einer statistischen Verteilung unterliegen.

Im Rahmen der vorliegenden Erfindungen können alle erfindungsgemäß angegebenen Indexzahlen und Wertbereiche der angegebenen können als Mittelwerte der möglichen statistischen Verteilung der tatsächlichen vorhandenen Strukturen und/oder deren Mischungen verstanden werden. Erfindungsgemäß können auch als Indexzahlen auch Dezimalzahlen (Kommazahlen), beispielsweise 1,2, vorkommen. In diesem Fall als Mittelwert einer Mischung enthaltend Verbindungen mit verschiedenen Indexzahlen.

In einer bevorzugten Ausführungsform bedeutet in der allgemeinen Formel (II) R Methyl, Ethyl und/oder Phenyl.

Weiter bevorzugt bedeuten in der allgemeinen Formel (II) R₄, R₅ und/oder R₆ beispielsweise 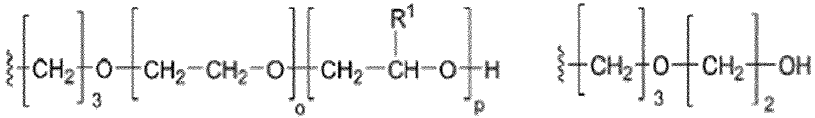 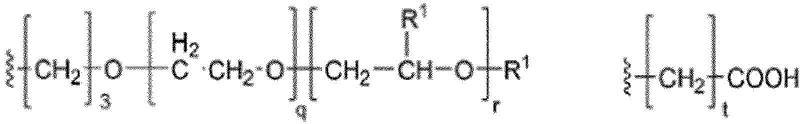 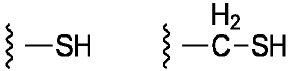 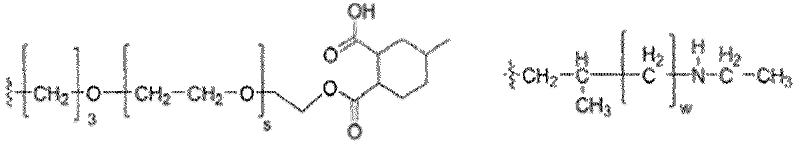 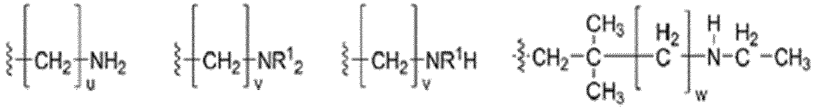 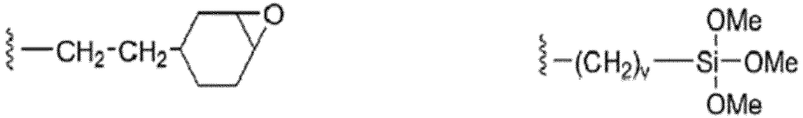 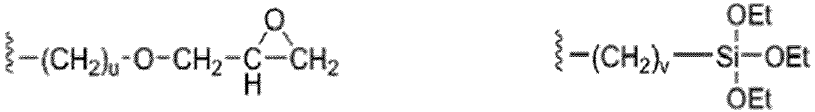 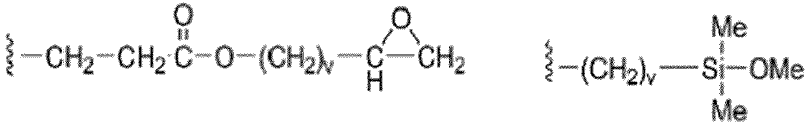 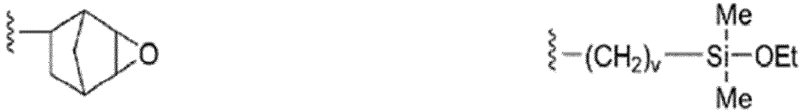 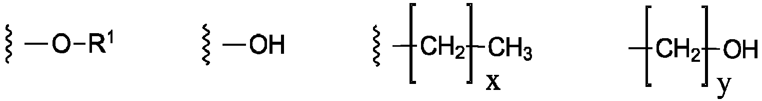 mit
m = 6 bis 20, bevorzugt 8 bis 18,
n = 2 bis 18, bevorzugt 4 bis 8,
o = 0 bis 30, bevorzugt 2 bis 20, insbesondere 5 bis 15,
p = 0 bis 30, bevorzugt 0 bis 10,
q = 0 bis 30, bevorzugt 2 bis 20, insbesondere 5 bis 15,
r = 0 bis 30, bevorzugt 0 bis 10,
s = 0 bis 10, bevorzugt 1 bis 5,
t = 1 bis 20, bevorzugt 1 bis 10,
u = 1 bis 10, bevorzugt 2 bis 4,
v = 1 bis 10, bevorzugt 2 bis 5,
w = 1 bis 6, bevorzugt 1 bis 3,
x = 1 bis 6, bevorzugt 2 bis 4,
y = 1 bis 10, bevorzugt 1 bis 3 aufweisen.

Die Funktionalität der erfindungsgemäß bevorzugt eingesetzten Polysiloxanpolyole, Polysiloxanpolyamine oder Polysiloxanpolythiole beträgt beispielsweise 2 bis 6, besonders bevorzugt 2, 3, 4, 5 oder 6, ganz besonders 2.

Die erfindungsgemäß bevorzugt eingesetzten Polysiloxanpolyole, Polysiloxanpolyamine oder Polysiloxanpolythiole enthalten beispielsweise 1 bis 50, besonders bevorzugt 2 bis 30, ganz besonders 3 bis 20, Wiederholungseinheiten. Erfindungsgemäß wird unter einem "Siloxan" eine Gruppe verstanden, die ein Grundgerüst enthält, das zwei oder mehrere -SiO-Gruppen enthält.

Ganz besonders bevorzugt wird erfindungsgemäß als Polysiloxanpolyol ein α,ω-Hydroxypropyl-terminiertes Polydimethylsiloxan mit einem OH-Gehalt von 1 bis 10, bevorzugt 2 bis 8 Gew.%, einem Molekulargewicht von 200 bis 2000 g/mol, bevorzugt 400 bis 1000 g/mol und einem Festkörpergehalt von 100 Gew.-% eingesetzt, so dass nach Reaktion mit den NCO-Gruppen der Diisocyanate und/oder Polyisocyanate der Einheit M eine entsprechend Polysiloxan-Einheit Q vorliegt.

Die vorliegende Erfindung betrifft bevorzugt das erfindungsgemäße Polysiloxanprepolymer, wobei die mindestens eine Polysiloxaneinheit in einer Menge von 0,1 bis 5 Gew.-%, bezogen auf das gesamte Polysiloxanprepolymer, vorliegt.

Weiterhin betrifft die vorliegende Erfindung bevorzugt das erfindungsgemäße Polysiloxanprepolymer, wobei das erfindungsgemäße Polysiloxanprepolymer ein zahlenmittleres Molekulargewicht Mn von < 4000 g/mol, bevorzugt von > 450 g/mol und < 3000 g/mol, besonders bevorzugt von > 650 g/mol und < 2500 g/mol und ganz besonders bevorzugt von > 800 g/mol und < 2500 g/mol, aufweist. Das zahlenmittlere Molekulargewicht Mn wird bestimmt durch Gelpermeationschromatographie (GPC) in Tetrahydrofuran bei 23 °C. Es wird dabei vorgegangen nach DIN 55672-1:2016-03: "Gelpermeationschromatographie, Teil 1 - Tetrahydrofuran als Elutionsmittel" (SECurity GPC-System von PSS Polymer Service, Flussrate 0,6 ml/min; Säulen: 2×PSS SDV (100A), 2xPSS SDV (50A,), 8×300 mm, 5 µm; RID-Detektor (RI-Agilent 1260).

Dabei werden Polystyrolproben bekannter Molmasse zur Kalibrierung verwendet. Die Berechnung des zahlenmittleren Molekulargewichts erfolgt softwaregestützt.

In der allgemeinen Formel (I) beschreibt r jeweils die Anzahl der vorliegenden Einheiten R, die wiederum aus der oben genannten Gruppe ausgewählt sind. In der allgemeinen Formel (I) bedeutet r bevorzugt jeweils unabhängig voneinander eine Zahl von 1 bis 30, besonders bevorzugt 1 bis 20, weiter bevorzugt 1 bis 5, ganz besonders bevorzugt ist r gleich 1.

In der allgemeinen Formel (I) beschreibt m jeweils die Anzahl der vorliegenden Einheiten M, die wiederum aus der oben genannten Gruppe ausgewählt sind. In der allgemeinen Formel (I) bedeutet m bevorzugt jeweils unabhängig voneinander eine Zahl von 1 bis 30, besonders bevorzugt 1 bis 20, weiter bevorzugt 1 bis 5, ganz besonders bevorzugt ist m gleich 1.

In der allgemeinen Formel (I) beschreibt p jeweils die Anzahl der vorliegenden Einheiten P, die wiederum aus der oben genannten Gruppe ausgewählt sind. In der allgemeinen Formel (I) bedeutet p bevorzugt jeweils unabhängig voneinander eine Zahl von 1 bis 30, besonders bevorzugt 1 bis 20, weiter bevorzugt 1 bis 5, ganz besonders bevorzugt ist p gleich 1.

In der allgemeinen Formel (I) beschreibt q jeweils die Anzahl der vorliegenden Einheiten Q, die wiederum aus der oben genannten Gruppe ausgewählt sind. In der allgemeinen Formel (I) bedeutet q bevorzugt jeweils unabhängig voneinander eine Zahl von 1 bis 30, besonders bevorzugt 1 bis 20, weiter bevorzugt 1 bis 5, ganz besonders bevorzugt ist q gleich 1.

In der allgemeinen Formel (I) beschreibt t jeweils die Anzahl der vorliegenden Einheiten -[(M)ₘ-(P)ₚ-(R)ᵣ], die an die Einheit(en) Q angebunden sind. In der allgemeinen Formel (I) bedeutet t bevorzugt jeweils unabhängig voneinander eine Zahl von 2 bis 5, besonders bevorzugt 2, 3 oder 4, ganz besonders bevorzugt ist t gleich 2.

Erfindungsgemäß kann als Siloxangruppen enthaltende Verbindung zusätzlich auch eine monofunktionelle Verbindung eingesetzt werden, beispielsweise ein Poly(dimethylsiloxan)-propylhydroxycopoylmer, insbesondere Heptamethyl-2-(3-hydroxypropyl)-trisiloxan mit einer Funktionalität von 1 und einem Molekulargewicht von 280 g/mol.

Die vorliegende Erfindung betrifft auch ein Verfahren zur Herstellung eines erfindungsgemäßen, NCO-terminierten Polysiloxanprepolymers, mindestens umfassend die folgenden Schritte:
(A) Umsetzung mindestens eines Polysiloxanpolyols, Polysiloxanpolyamins und/oder Polysiloxanpolythiols mit mindestens einem Diisocyanat und/oder mindestens einem Polyisocyanat, um mindestens ein NCO-terminiertes Polysiloxan zu erhalten,
(B) gegebenenfalls Entfernen von überschüssigem mindestens einen Diisocyanat und/oder mindestens einem Polyisocyanat,
(C) Umsetzung des mindestens einen NCO-terminierten Polysiloxans aus Schritt (A) oder (B) mit mindestens einem Polyol,
(D) Umsetzung des in Schritt (C) erhaltenen Produkts mit mindestens einem Diisocyanat oder mindestens einem Polyisocyanat, um das NCO-terminierte Polysiloxanprepolymer zu erhalten.

Die einzelnen Schritte des erfindungsgemäßen Verfahrens werden im Folgenden detailliert beschrieben.

Schritt (A) des erfindungsgemäßen Verfahrens umfasst die Umsetzung mindestens eines Polysiloxanpolyols, Polysiloxanpolyamins und/oder Polysiloxanpolythiols, bevorzugt mindestens eines Polysiloxanpolyols, mit mindestens einem Diisocyanat und/oder mindestens einem Polyisocyanat, bevorzugt mindestens ein Diisocyanat, um mindestens ein NCO-terminiertes Polysiloxan zu erhalten.

Schritt (A) des erfindungsgemäßen Verfahrens kann im Allgemeinen nach allen dem Fachmann bekannten Verfahren erfolgen. Bevorzugt kann Schritt (A) des erfindungsgemäßen Verfahrens in dem Fachmann bekannten Vorrichtungen erfolgen, beispielsweise Rührreaktoren mit Zu- und Ableitungen für Edukte und Produkte. Gegebenenfalls kann Schritt (A) des erfindungsgemäßen Verfahrens unter Wasser- und Luftausschluss erfolgen, beispielsweise in einer trockenen Atmosphäre aus Stickstoff oder einem Edelgas, beispielsweise Helium oder Argon.

Schritt (A) des erfindungsgemäßen Verfahrens kann beispielsweise erfolgen, indem die Substrate, insbesondere das mindestens eine Diisocyanat und/oder das mindestens eine Polyisocyanat und das mindestens eine Polysiloxanpolyol, Polysiloxanpolyamin und/oder Polysiloxanpolythiol mit einander vermischt und zur Reaktion gebracht werden.

In einer bevorzugten Ausführungsform erfolgt Schritt (A) des erfindungsgemäßen Verfahrens, indem das mindestens eine Diisocyanat und/oder das mindestens eine Polyisocyanat vorgelegt werden. Erfindungsgemäß kann das mindestens eine Diisocyanat und/oder das mindestens eine Polyisocyanat in einem Lösungsmittel oder ohne Lösungsmittel vorgelegt werden. Geeignete Lösungsmittel für diesen Reaktionsschritt sind bevorzugt solche, die an der Reaktion an sich nicht teilnehmen, beispielsweise Ethylacetat, Butylacetat, Methoxypropylaceat, Solvent Naphtha (Solvesso 100) und/oder Methylethylketon. Bevorzugt wird Schritt (A) des erfindungsgemäßen Verfahrens in Abwesenheit eines Lösungsmittels durchgeführt. Erfindungsgemäß bevorzugt wird das vorgelegte mindestens eine Diisocyanat und/oder das mindestens eine Polyisocyanat auf eine Temperatur oberhalb Raumtemperatur, beispielsweise 60 bis 120 °C, bevorzugt 80 bis 110 °C, erhitzt.

Weiter bevorzugt wird zu dem vorgelegten mindestens einen Diisocyanat und/oder mindestens einem Polyisocyanat das mindestens eine Polysiloxanpolyol, Polysiloxanpolyamin und/oder Polysiloxanpolythiol hinzugegeben.

Das Verhältnis von in der Reaktionsmischung vorliegenden NCO-Gruppen zu den NCO-reaktiven Gruppen, d.h. OH-, SH- und/oder NH-Gruppen, beträgt in Schritt (A) des erfindungsgemäßen Verfahrens im Allgemeinen 1 bis 50, bevorzugt 2 bis 30, besonders bevorzugt 2 bis 20.

Das erhaltene Reaktionsgemisch wird im Allgemein so lange gerührt bis ein vollständiger Umsatz erfolgt ist. Bevorzugt wird das Reaktionsgemisch 1 bis 8 h, bevorzugt 2 bis 6 h, gerührt.

Die Reaktion gemäß Schritt (A) des erfindungsgemäßen Verfahrens erfolgt bevorzugt bei einer Temperatur von 60 bis 120 °C, besonders bevorzugt 80 bis 110 °C.

Nach Schritt (A) des erfindungsgemäßen Verfahren wird ein Reaktionsgemisch erhalten, welches das Umsetzungsprodukt des mindestens einen Polysiloxanpolyols, Polysiloxanpolyamins und/oder Polysiloxanpolythiols mit mindestens einem Diisocyanat oder mindestens einem Polyisocyanat, d.h, mindestens ein NCO-terminiertes Polysiloxan, enthält.

Erfindungsgemäß kann das in Schritt (A) erhaltene Reaktionsgemisch entweder direkt in Schritt (C) des erfindungsgemäßen Verfahrens eingesetzt werden. Dies erfolgt bevorzugt dann, wenn das Verhältnis von NCO-Gruppen zu NCO-reaktiven Gruppen in der Reaktionsmischung so eingestellt war, dass das NCO-terminierte Polysiloxan erhalten wird, aber kein Überschuss an mindestens einem Diisocyanat und/oder mindestens einem Polyisocyanat vorlag, d.h. in der nach Schritt (A) erhaltenen Reaktionsmischung kein Überschuss an mindestens einem Diisocyanat und/oder mindestens einem Polyisocyanat vorliegt.

In einer bevorzugten Ausführungsform der vorliegenden Erfindung wird das in Schritt (A) des erfindungsgemäßen Verfahrens erhaltene Reaktionsgemisch, besonders bevorzugt ohne weitere Zwischenschritte, in Schritt (B) des erfindungsgemäßen Verfahrens überführt.

Der optionale Schritt (B) des erfindungsgemäßen Verfahrens umfasst das Entfernen von überschüssigem mindestens einen Diisocyanat oder mindestens einem Polyisocyanat.

Schritt (B) wird bevorzugt durchgeführt. Durch das Entfernen von überschüssigem mindestens einen Diisocyanat oder mindestens einem Polyisocyanat in Schritt (B) des erfindungsgemäßen Verfahrens wird das NCO-terminierte Polysiloxanpolyol erhalten, welches nicht mit mindestens einem Diisocyanat und/oder mindestens einem Polyisocyanat verunreinigt ist. Die Durchführung des erfindungsgemäßen Schritts (B) ermöglicht es daher, die erfindungsgemäß gewünschte Zielverbindung, das NCO-terminiertes Polysiloxanprepolymer, in hoher Reinheit, Einheitlichkeit und gegenüber alternativen Herstellverfahren mit einem erhöhten Molekulargewicht zu erhalten.

Erfindungsgemäß bevorzugt liegt der Gehalt an mindestens einem Diisocyanat oder mindestens einem Polyisocyanat, bevorzugt mindestens einem Diisocyanat, in der Reaktionsmischung nach Schritt (B) bei höchstens 5 Gew.-%, bevorzugt 1 bis 0,01 Gew.-%.

Schritt (B) des erfindungsgemäßen Verfahrens kann im Prinzip nach allen dem Fachmann bekannten Verfahren erfolgen. Bevorzugt betrifft die vorliegende Erfindung das erfindungsgemäße Verfahren, wobei Schritt (B) durch Dünnschichtverdampfung, Phasenseparation, Ausfällung oder Kombinationen davon erfolgt.

Bevorzugt erfolgt Schritt (B) des erfindungsgemäßen Verfahrens durch Dünnschichtverdampfen. Weiter bevorzugt erfolgt das Dünnschichtverdampfen bei einer Temperatur von 50 bis 200 °C, bevorzugt 80 bis 120 °C. Das Dünnschichtverdampfen erfolgt des Weiteren bei einem Druck von bevorzugt 0,001 bis 500 mbar(a), besonders bevorzugt 0,01 bis 200 mbar(a).

Schritt (B) des erfindungsgemäßen Verfahrens kann in allen dem Fachmann bekannten Vorrichtungen erfolgen, insbesondere in einem Dünnschichtverdampfer oder für eine Phasenseparation oder Ausfällung geeigneten Apparaturen.

Das nach Schritt (A) oder (B), bevorzugt nach Schritt (B), erhaltene NCO-terminierte Polysiloxanpolyol weist einen NCO-Gehalt von im Allgemeinen 1 bis 20 Gew.-%, bevorzugt 4 bis 18 Gew.-%, auf.

Das nach Schritt (A) oder (B), bevorzugt nach Schritt (B), erhaltene NCO-terminierte Polysiloxanpolyol weist eine Konzentration von im Allgemeinen 100 bis 50 Gew.-%, bevorzugt 100 bis 75 Gew.-%%, auf. Das bedeutet, dass das gewünschte Produkt bevorzugt ohne Verunreinigungen und Lösungsmittel erhalten wird.

Das nach Schritt (A) oder (B), bevorzugt nach Schritt (B), erhaltene NCO-terminierte Polysiloxanpolyol weist eine Viskosität von im Allgemeinen 50 bis 4000 mPa·s, bevorzugt 100 bis 2500 mPa·s, besonders bevorzugt 100 bis 1000 mPa·s, auf.

Schritt (C) des erfindungsgemäßen Verfahrens umfasst die Umsetzung des mindestens einen NCO-terminierten Polysiloxans aus Schritt (A) oder (B) mit mindestens einem Polyol.

Schritt (C) des erfindungsgemäßen Verfahrens kann im Allgemeinen nach allen dem Fachmann bekannten Methoden erfolgen. Erfindungsgemäß bevorzugt wird das NCO-terminierte Polysiloxan aus Schritt (A) oder (B) mit dem mindestens einen Polyol vermischt und zur Reaktion gebracht. Erfindungsgemäß geeignete und bevorzugte Polyole sind bereits oben genannt.

Das molare Verhältnis der in der Reaktionsmischung gemäß Schritt (C) des erfindungsgemäßen Verfahrens vorliegenden NCO-Gruppen zu den vorliegenden OH-, NH- und/oder SH-Gruppen des mindestens einen eingesetzten Polyols beträgt bevorzugt 0,001 bis 0,9, besonders bevorzugt 0,01 bis 0,8.

Schritt (C) des erfindungsgemäßen Verfahren kann in Gegenwart eines Lösungsmittels oder in Abwesenheit eines Lösungsmittels erfolgen. In einer bevorzugten Ausführungsform wird Schritt (C) des erfindungsgemäßen Verfahrens in Gegenwart eines Lösungsmittels durchgeführt. Das in Schritt (C) des erfindungsgemäßen Verfahrens eingesetzte Lösungsmittel ist bevorzugt ausgewählt aus der Gruppe bestehend aus Estern, beispielsweise 1-Methoxy-2-propylacetat (MPA), Butylacetat (BA), dibasischen Estern, Ketonen, beispielsweise Methylethylketon, Ethern, beispielsweise Diethylether, und Mischungen davon.

In der Reaktionsmischung gemäß Schritt (C) des erfindungsgemäßen Verfahrens liegen die Komponenten insgesamt in einer Konzentration von 20 bis 80 Gew.-%, bevorzugt 30 bis 70 Gew.-%, jeweils Feststoffanteil bezogen auf die gesamte Lösung, vor.

Die Umsetzung gemäß Schritt (C) des erfindungsgemäßen Verfahrens kann in Gegenwart mindestens eines Katalysators erfolgen. Geeignete Katalysatoren sind dem Fachmann an sich bekannt und beispielsweise ausgewählt aus der Gruppe der Zinn-organyle, insbesondere ist Dibutylzinnlaurat geeignet. Wird in Schritt (C) des erfindungsgemäßen Verfahrens ein Katalysator eingesetzt, so liegt dieser bevorzugt in einer Konzentration von 0,01 bis 0,1 Gew.-%, bezogen auf die Reaktionsmischung, vor.

Schritt (C) des erfindungsgemäßen Verfahrens kann in dem Fachmann an sich bekannten Vorrichtungen, beispielsweise Rührreaktoren mit entsprechenden Zu- und Abläufen, erfolgen. Des Weiteren kann Schritt (C) des erfindungsgemäßen Verfahrens bevorzugt in einer inerten Atmosphäre, beispielsweise in einer Atmosphäre aus Stickstoff oder einem Edelgas, beispielsweise Helium oder Argon, durchgeführt werden.

Schritt (C) des erfindungsgemäßen Verfahrens wird bevorzugt bei einer Temperatur von 20 bis 100 °C, bevorzugt 40 bis 80 °C, durchgeführt. Im Allgemeinen wird Schritt (C) des erfindungsgemäßen Verfahrens bei Atmosphärendruck oder durch Verwendung eines inerten Gases gegenüber Atmosphärendruck leicht erhöhten Druck durchgeführt.

Schritt (C) des erfindungsgemäßen Verfahrens wird im Allgemeinen so lange durchgeführt, bis alle vorhandenen NCO-Gruppen abreagiert sind, d.h. mit einer OH- oder SH-Gruppe reagiert haben. Bevorzugt wird Schritt (C) des erfindungsgemäßen Verfahren so lange durchgeführt, bis der Gehalt an NCO-Gruppen in der Reaktionsmischung weniger als 0,5 Gew.-%, besonders bevorzugt weniger als 0,2 Gew.-%, jeweils bezogen auf die gesamte Reaktionsmischung, vorliegen. Ganz besonders bevorzugt liegen in der Reaktionsmischung keine NCO-Gruppen mehr vor, d.h. der Gehalt an NCO-Gruppen liegt unterhalb der dem Fachmann bekannten analytischen Nachweisgrenze.

In einer bevorzugten Ausführungsform des erfindungsgemäßen Verfahrens kann die nach Beendigung von Schritt (C) erhaltene Reaktionsmischung direkt in Schritt (D) des erfindungsgemäßen Verfahrens überführt werden. Gegebenenfalls kann nach Schritt (C) und vor Schritt (D) eine Aufarbeitung der Reaktionsmischung erfolgen.

Schritt (D) des erfindungsgemäßen Verfahrens umfasst die Umsetzung des in Schritt (C) erhaltenen Produkts mit mindestens einem Polyisocyanat und/oder mindestens einem Diisocyanat, bevorzugt mit mindestens einem Polyisocyanat, um das NCO-terminierte Polysiloxanprepolymer zu erhalten.

Schritt (D) des erfindungsgemäßen Verfahrens kann im Allgemeinen nach allen dem Fachmann bekannten Methoden erfolgen. In einer bevorzugten Ausführungsform der vorliegenden Erfindung wird das mindestens eine Polyisocyanat und/oder das mindestens eine Diisocyanat, bevorzugt das mindestens eine Polyisocyanat, zu der aus Schritt (C) erhaltenen Reaktionsmischung gegeben.

Das molare Verhältnis der in der Reaktionsmischung, die in Schritt (D) eingesetzt wird, vorhandenen OH- oder SH-Gruppen zu den in Schritt (D) zugegebenen NCO-Gruppen beträgt erfindungsgemäß bevorzugt 1,1 bis 20, besonders bevorzugt 2 bis 12.

Schritt (D) des erfindungsgemäßen Verfahrens wird bevorzugt in Gegenwart eines Lösungsmittels durchgeführt. In einer bevorzugten Ausführungsform des erfindungsgemäßen Verfahrens enthält die in Schritt (D) eingesetzte Reaktionsmischung bereits aus Schritt (C) Lösungsmittel. In einer weiter bevorzugten Ausführungsform der vorliegenden Erfindung wird in Schritt (D) des erfindungsgemäßen Verfahrens Lösungsmittel zugegeben. In einer bevorzugten Ausführungsform wird in Schritt (D) so viel Lösungsmittel zugegeben, dass die Konzentration der gelösten Komponenten in der Reaktionsmischung 20 bis 80 Gew.-%, bevorzugt 30 bis 70 Gew.-%, jeweils bezogen auf die gesamte Reaktionsmischung, beträgt. Für Schritt (D) geeignete Lösungsmittel sind bezüglich Schritt (C) bereits genannt.

Schritt (D) des erfindungsgemäßen Verfahrens kann in dem Fachmann bekannten Vorrichtungen, beispielsweise Rührreaktoren mit entsprechenden Zu- und Abläufen, erfolgen. Des Weiteren kann Schritt (D) des erfindungsgemäßen Verfahrens bevorzugt in einer inerten Atmosphäre, beispielsweise in einer Atmosphäre aus Stickstoff oder einem Edelgas, beispielsweise Helium oder Argon, durchgeführt werden.

Schritt (D) des erfindungsgemäßen Verfahrens wird bevorzugt bei einer Temperatur von 20 bis 100 °C, bevorzugt 40 bis 80 °C, durchgeführt. Im Allgemeinen wird Schritt (D) des erfindungsgemäßen Verfahrens bei Atmosphärendruck oder durch Verwendung eines inerten Gases bei gegenüber Atmosphärendruck leicht erhöhtem Druck durchgeführt.

Nach Schritt (D) des erfindungsgemäßen Verfahrens wird das erfindungsgemäß gewünschte NCO-terminierte Polysiloxanprepolymer, insbesondere der allgemeinen Formel (I), erhalten. Nach Schritt (D) können gegebenenfalls Aufarbeitungsschritte, beispielsweise Abtrennen des vorhandenen Lösungsmittels, wie Ethylacetat, Methoxypropylacetat, Butylacetat, Solvent Naphtha (Solvesso 100) oder deren Gemische erfolgen.

Das nach Schritt (D) erhaltene NCO-terminierte Polysiloxanprepolymer weist einen NCO-Gehalt von im Allgemeinen 0,1 bis 17 Gew.-%, bevorzugt 2 bis 14 Gew.-%, auf.

Das nach Schritt (D) erhaltene NCO-terminierte Polysiloxanprepolymer weist einen Festkörperanteil von im Allgemeinen 20 bis 80 Gew.-%, bevorzugt 30 bis 70 Gew.-%, auf.

Das nach Schritt (D) erhaltene NCO-terminierte Polysiloxanprepolymer weist eine Hazen-Farbzahl von im Allgemeinen 0 bis 300, bevorzugt 10 bis 150, auf.

Ein weiterer Gegenstand der vorliegenden Erfindung ist ein NCO-terminiertes Polysiloxanprepolymer, erhältlich oder hergestellt durch das erfindungsgemäße Verfahren. Das erfindungsgemäße NCO-terminierte Polysiloxanprepolymer zeichnet sich insbesondere dadurch aus, dass einerseits die daraus erhältlichen Beschichtungen einen deutlichen besseren Restglanz und Reflow aufweisen als vergleichbare Systeme ohne das erfindungsgemäße NCO-terminierte Polysiloxanprepolymer und andererseits, dass sie als oberflächenaktive Substanzen einen verringerten Einsatz bzw. ein Entfallen von Verlaufsadditiven ermöglichen können. Die Messung von Restglanz und Reflow erfolgt bevorzugt wie im Beispielteil angegeben und Beobachtung der Verringerung an Verlaufsadditiven erfolgt bevorzugt mittels visueller Bewertung der Beschichtung, ob sich eine Orangenhaut gebildet hat oder nicht.

Die vorliegende Erfindung betrifft des Weiteren eine Formulierung enthaltend mindestens ein erfindungsgemäßes NCO-terminierten Polysiloxanprepolymer, bevorzugt in einer Menge von 5 bis 70 Gew.-%, bezogen auf die gesamte Formulierung. Insbesondere handelt es sich bei der erfindungsgemäßen Formulierung um eine Lackformulierung.

Abgesehen von dem erfindungsgemäßen NCO-terminierten Polysiloxanprepolymer sind entsprechende Formulierungen dem Fachmann an sich bekannt.

Die erfindungsgemäße Lackformulierung kann bevorzugt in Form einer dem Fachmann an sich bekannten 2-Komponenten-Formulierung vorliegen.

Eine erfindungsgemäße 2-Komponenten-Formulierung enthält bevorzugt in der ersten Komponente mindestens eine Polyhydroxyverbindung und gegebenenfalls Additive (Komponente A) und in der zweiten Komponente mindestens ein erfindungsgemäßes NCO-terminiertes Polysiloxanprepolymer, mindestens ein Polyisocyanat und gegebenenfalls Additive (Komponente B).

Gemäß einer bevorzugten Ausführungsform der Erfindung ist die erfindungsgemäße Lackformulierung, insbesondere die erfindungsgemäße 2-Komponenten-Formulierung, eine Formulierung für eine Klar- und/oder Decklackschicht.

Unter der erfindungsgemäßen Klar- und/oder Decklackschicht kann ein Basislack vorliegen. Zusammensetzung, Anforderungen und Verarbeitung von Formulierungen für Basislacke sind dem Fachmann an sich bekannt und beispielsweise beschrieben in den Spezifikationen der Automobilfirmen oder z.B. auch im Artikel "Eine Frage der Einstellung", veröffentlicht in der "Farbe und Lack 07/2003" (Vinzentz-Verlag), Seiten 1 bis 3, weiterhin in U. Poth, Automotive Coatings Formulation, Vinventz-Verlag 2008, ISBN 9783866309043, Seiten 137 bis 163 und 213 bis 215 oder in U. Kuttler, Principles of Automotive OEM Coatings, Allnex Belgium S.A.

In Komponente A der erfindungsgemäßen 2-Komponenten-Formulierung liegt bevorzugt mindestens eine Polyhydroxyverbindung vor. Vorzugsweise ist die Polyhydroxyverbindung, ausgewählt aus der Gruppe bestehend aus Polyesterpolyolen, Polyurethanpolyolen, Polysiloxanpolyolen, Polycarbonatpolyolen, Polyacrylatpolyolen und Mischungen davon, bevorzugt ausgewählt aus der Gruppe bestehend aus Polyesterpolyolen, Polyacrylatpolyolen, Polyurethanpolyolen und Mischungen davon. Entsprechende Polyhydroxyverbindungen sind dem Fachmann an sich bekannt und beispielsweise weiter oben in dieser Schrift beschrieben.

Die in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 2-Ethyl-1,3-hexandiol, 1,8-Octandiol, Neopentylglykol, 1,4-Bishydroxymethylcyclohexan, 2-Methyl-1,3-propandiol, 2,2,4-Trimethyl-1,3-pentandiol, Dipropylenglykol, Polypropylenglykole, Dibutylenglykol, Polybutylenglykole, Bisphenol A, Tetrabrombisphenol A, aber auch Lacton modifizierte Diole in Frage. Bevorzugt enthält die Diolkomponente 40 bis 100 Gew.-% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol, ε-Caprolacton oder durch Veretherung von Hexandiol mit sich selbst zum Di- oder Trihexylenglykol erhalten werden. Auch Polyether-Polycarbonatpolyole können eingesetzt werden.

Bevorzugt sind Polycarbonatpolyole auf Basis von Dimethylcarbonat und Hexandiol und/oder Butandiol und/oder ε-Caprolacton. Ganz besonders bevorzugt sind Polycarbonatpolyole auf Basis von Dimethylcarbonat und Hexandiol und/oder ε-Caprolacton.

Geeignete Polyole sind beispielsweise auch die bekannten, durch Umsetzung einfacher Glykole, wie z. B. Diethylenglykol, Triethylenglykol, 4,4'-Di((2-hydroxyethoxy)phenyl)-dimethylmethan (Addukt von 2 mol Ethylenoxid an Bisphenol A) oder Hexandiol, mit Formaldehyd erhältlichen Polyacetalpolyole oder auch durch Polykondensation cyclischer Acetale, wie z. B. Trioxan, hergestellte Polyacetale.

Weitere geeignete Polyole sind beispielsweise auch die in EP-A 0 689 556 und EP-A 0 937 110 beschriebenen, z. B. durch Umsetzung epoxidierter Fettsäureester mit aliphatischen oder aromatischen Polyolen unter Epoxidringöffung erhältlichen speziellen Polyole.

Hydroxylgruppen enthaltende Polybutadiene können ebenfalls als Polyole dienen.

Die polymeren Polyole können einzeln oder in Form beliebiger Mischungen untereinander verwendet werden. Sie können sowohl in lösemittelfreier Form als auch in üblichen Lösemitteln gelöst vorliegen.

Des Weiteren können in Komponente (A) der erfindungsgemäßen 2-Komponenten-Formulierung Additive vorliegen. Solche Additive sind dem Fachmann an sich bekannt.

Erfindungsgemäß ist das gegebenenfalls vorliegende Additiv ausgewählt aus der Gruppe bestehend aus Katalysatoren, Lösungsmitteln, Lichtschutzmittel wie UV-Absorber und sterisch gehinderte Amine (HALS), Stabilisatoren, beispielsweise UV-Stabilisatoren, Füllstoffe, Antiabsetzmittel, Entschäumungsmittel, Antikratermittel, Netzmittel, Verlaufsmittel, filmbildende Hilfsmittel, Reaktivverdünner, Substanzen zur Rheologiesteuerung, Slipadditive, Komponenten, die das Anschmutzen verhindern und/oder die Reinigungsfähigkeit der ausgehärteten Lacke verbessern, Mattierungsmittel, Antioxidantien, Pigmente und Mischungen davon. Bevorzugt sind dabei UV-Stabilisatoren, Antioxidantien, Verlaufsmittel, Füllstoffe und/oder Pigmente.

Erfindungsgemäß geeignete Katalysatoren sind geeignet, die Reaktion der Komponente A mit der Komponente B zu katalysieren. Solche Katalysatoren sind dem Fachmann bekannt. Geeignet sind insbesondere Zinnkatalysatoren, Bismutkatalysatoren, Zinkkatalysatoren, Zirkoniumkatalysatoren und Aminbasen. Besonders geeignet sind beispielsweise Zinkverbindungen, z. B. Zink-(II)-stearat, Zink-(II)-n-octanoat, Zink-(II)-2-ethyl-1-hexanoat, Zink-(II)-naphthenat, Zinkchlorid, Zink-2-ethylcaproat oder Zink-(II)-acetylacetonat, Zinnverbindungen, z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Zinn(II)-ethylcaproat, Di-butylzinn-(IV)-dilaurat, Dibutylzinndimaleat oder Dioctylzinndiacetat, Zirconiumverbindungen, z. B. Zirconium-(IV)-2-ethyl-1-hexanoat, Zirconium-(IV)-isopropylat, Zirkonium-(IV)-n-butylat, Zirkonium-(IV)-2-ethylhexanoat, Zirkonyloctanoat, Zirconium-(IV)-neodecanoat, Zirconium-(IV)-naphthenat oder Zirconium-(IV)-acetylacetonat, Bismut(III)-2-ethylhexanoat und Bismut(III)-octoat.

Der Katalysator wird bevorzugt in Mengen von 0,001 bis 0,5 Gew.-% eingesetzt, stärker bevorzugt in Mengen von 0,01 bis 0,3 Gew.-%, jeweils bezogen auf das Gesamtgewicht der Verbindung A der ersten Komponente.

Komponente A kann ferner bevorzugt mindestens ein Lösungsmittel enthalten. Dabei sind generell alle dem Fachmann auf dem Gebiet bekannten Lösungsmittel geeignet. Insbesondere geeignet sind aromatische und aliphatische Lösungsmittel, bevorzugt ausgewählt aus der Gruppe bestehend aus Butylacetat, 1-Methoxy-2-propylacetat, 3-Methoxy-1-butylacetat, Ethylacetat, dibasischen Estern, Propylen-n-butylether, Methylethylketon, Toluol, Xylol, Solvent Naphta (Kohlenwasserstoffgemisch) und Mischungen davon. Das Lösungsmittel ist bevorzugt in 30 bis 90 Gew.-%, besonders bevorzugt in 45 bis 70 Gew.-%, basierend auf dem Gesamtgewicht der Komponente A, enthalten.

Erfindungsgemäß geeignete UV-Stabilisatoren können vorzugsweise ausgewählt werden aus der Gruppe bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-su-berat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, z.B. α-Cyano-β-methyl-4-methoxyzimtsäuremethylester, α-Cyano-β-methyl-4-methoxyzimtsäurebutylester, α-Cyano-β-phenylzimtsäureethylester, α-Cyano-β-phenylzimtsäureisooctylester; und Malonesterderivaten, z.B. 4-Methoxy-benzylidenmalonsäuredimethylester, 4-Methoxybenzylidenmalonsäurediethylester, 4-Butoxybenzylidenmalonsäuredimethylester, DL-Alpha-Tocopherol, Tocopherol, Zimtsäurederivaten, Cyanoacrylaten und Mischungen davon. Diese bevorzugten UV-Stabilisatoren können sowohl einzeln als auch in beliebigen Kombinationen untereinander zum Einsatz kommen. Besonders bevorzugte UV-Stabilisatoren sind unter den Handelsnamen Tinuvin^{®} 292 und Tinuvin^{®} 1130 der Firma BASF SE erhältlich.

Als geeignete Radikalfänger können sterisch gehinderte Amine (oft auch als HALS- oder HAS-Verbindung bezeichnet; Hindered Amine (Light) Stabilizer) dienen. Diese sind ausgewählt aus der Gruppe bestehend aus 2,2,6,6-Tetramethylpiperidin, 2,6-Di-tert-butylpiperidin oder deren Derivaten, z.B. Bis-(2,2,6,6-tetra-methyl-4-piperidyl)sebacinat, und Mischungen davon. Diese sind z.B. erhältlich als Tinuvin^{®}- und Chimaassorb^{®}-Marken der BASF SE. N-alkylierte Radikalfänger sind beispielsweise Bis(1,2,2,6,6-pentamethyl-4-piperidinyl)-[[3,5-bis(1,1-dimethylethyl)-4-hydroxyphenyl]methyl]butylmalonat (z.B. Tinuvin^{®} 144 der BASF); eine Mischung aus Bis(1,2,2,6,6-Pentamethyl-4-Piperidinyl)sebacat und Methyl(1,2,2,6,6-pentamethyl-4-piperidinylsebacat (z.B. Tinuvin^{®} 292 der BASF SE); oder die N-(o-alkyliert) sind, wie z.B. Dekandisäure-bis-(2,2,6,6,-tetramethyl-1-(octyloxy)-4-piperidinyl)-ester, Reaktionsprodukte mit 1,1-Dimethylethylhydroperoxid und Oktan (z.B. Tinuvin^{®} 123 der BASF SE), und speziell dem HALS-Triazin, Reaktionsprodukte von 2-Aminoethanol mit Cyclohexan und peroxidiertem N-butyl-2,2,6,6-tetramethyl-4-piperidinamine-2,4,6-trichloro-1,3,5-triazin Reaktionsprodukt" (z.B. Tinuvin^{®} 152 der BASF SE).

Gegebenenfalls werden ein oder mehrere der beispielhaft genannten UV-Stabilisatoren der Komponente A vorzugsweise in Mengen von 0,001 bis 3,0 Gew.-%, besonders bevorzugt 0,01 bis 2 Gew.-%, in Bezug auf das Gesamtgewicht der Verbindung A, eingesetzt.

Erfindungsgemäß geeignete Antioxidantien sind vorzugsweise sterisch gehinderte Phenole, welche vorzugsweise ausgewählt werden können aus der Gruppe bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thio-diethyl-bis[3-(3,5-di-tert-butyl-4-hydroxyphenyl)propionat]. Diese können bei Bedarf sowohl einzeln als auch in beliebigen Kombinationen untereinander eingesetzt werden. Antioxidantien werden vorzugsweise in Mengen von 0,001 bis 3,0 Gew.-%, besonders bevorzugt 0,02 bis 2,0 Gew.-%, jeweils berechnet als Gesamtmenge an eingesetzten Antioxidantien in Bezug auf das Gesamtgewicht der Verbindung A.

Zur Verbesserung der Substratbenetzung können gegebenenfalls geeignete Verlaufsmittel, beispielsweise organisch modifizierte Siloxane, wie z. B. Polyether-modifizierte Siloxane, Polyacrylate und/oder Fluortenside, enthalten sein. Diese Verlaufsmittel kommen bevorzugt in Mengen von 0,01 Gew.-% bis zu 3 Gew.-%, vorzugsweise von 0,01 Gew.-% bis zu 2 Gew.-%, besonders bevorzugt von 0,05 bis 1,5 Gew.-%, berechnet als Gesamtmenge an eingesetzten Verlaufsmitteln in Bezug auf das Gesamtgewicht der Verbindung A. Bevorzugte Verlaufsmittel sind kommerziell unter dem Handelsnamen BYK 141 und BYK 311 der Firma Altana erhältlich.

Die in Komponente B der erfindungsgemäßen 2-Komponentenformulierung vorliegenden Polyisocyanate sind beispielsweise ausgewählt aus der weiter oben für die Synthese des erfindungsgemäßen Polysiloxanprepolymers genannten Gruppe. Bevorzugte Polyisocyanate umfassen alle höhermolekularen Oligomeren mit Biuret-, Uretdion-, Isocyanurat-, Iminooxadiazindion-, Allophanat-, Urethan- und/oder Carbodiimid/Uretonimin-Struktureinheiten erhältlich durch Umsetzung von Di- oder Triisocyanaten ausgewählt aus der Gruppe bestehend aus PDI, HDI, HDI, H12MDI, IPDI und Mischungen davon. Diese Polyisocyanate liegen im Allgemeinen in einer Menge von 5 bis 50 Gew.-%, bevorzugt 5 bis 25 Gew.-%, jeweils bezogen auf die Gesamtformulierung bestehend aus Komponente A und Komponente B, vor.

Des Weiteren liegt in Komponente B der erfindungsgemäßen 2-Komponentenformulierung das erfindungsgemäße NCO-terminierte Polysiloxanprepolymer der allgemeinen Formel (I) vor. Dieses liegt beispielsweise in einer Menge von im Allgemeinen 50 bis 95 Gew.-%, bevorzugt 75 bis 95 Gew.-%, jeweils bezogen auf Komponente B, vor.

Bevorzugt liegen in Komponente B neben den genannten Verbindungen keine weiteren Additive vor.

Erfindungsgemäß kann es sich bei der erfindungsgemäßen 2-Komponentenformulierung auch um eine wässrige Formulierung handeln. In dieser Ausführungsform ist in Komponenten A und/oder in Komponente B der erfindungsgemäßen 2-Komponentenfomrulierung das oben genannte mindestens eine Lösungsmittel durch Wasser ersetzt.

Die Polyisocyanatkomponente A) kann neben den erfindungsgemäßen NCO-terminierten Siloxanprepolymer gegebenenfalls noch Polyisocyanate mit aliphatisch, cycloaliphatisch, araliphatisch und / oder aromatisch gebundenen Isocyanatgruppen enthalten, die gegebenenfalls auch Siloxanketten enthalten. Bei diesen weiteren Polyisocyanaten handelt es sich insbesondere um die bekannten Lackisocyanate mit Uretdion-, Isocyanurat-, Iminooxadiazindion-, Urethan-, Allophanat-, Biuret- und / oder Oxadiazintrion-Struktur, wie sie beispielhaft in Laas et al., J. Prakt. Chem. 336, 1994, 185-200, in DE-A 1 670 666, DE-A 3 700 209, DE-A 3 900 053, EP-A 0 330 966, EP-A 0 336 205, EP-A 0 339 396 und EP-A 0 798 299. Bevorzugt werden hierfür die weiter oben als Einheit R beschriebenen Verbindungen eingesetzt.

Besonders bevorzugte weitere Polyisocyanate in der Polyisocyanatkomponente A) sind solche der genannten Art mit ausschließlich aliphatisch und/oder cycloaliphatisch gebundenen Isocyanatgruppen, insbesondere solche auf Basis auf PDI, HDI und / oder IPDI.

Diese weiteren Polyisocyanate werden in den erfindungsgemäßen Beschichtungsmitteln gegebenenfalls in Mengen von bis zu 70 Gew.-%, bevorzugt bis zu 60 Gew.-%, besonders bevorzugt bis zu 50 Gew.-%, bezogen auf die Gesamtmenge der Polyisocyanatkomponente A), bestehend aus mindestens einem NCO-terminierten Siloxanprepolymer und gegebenenfalls weiteren Polyisocyanaten.

Die erfindungsgemäßen Formulierungen, insbesondere Lack-Formulierungen, können als Bindemittelkomponente beliebige wässrige Polymerdispersionen B) enthalten, die bevorzugt gegenüber Isocyanatgruppen reaktive Gruppen, besonders bevorzugt Hydroxylgruppen und/oder Aminogruppen, tragen.

Als wässrige Polymerdispersionen B) kommen alle in der wässrigen 2K-PUR-Lacktechnologie üblichen Polymerdispersionen in Frage. Es handelt sich beispielsweise um die üblichen wässrigen oder wasserdispergierbaren Polyacrylatharze, Polyesterharze, Polyurethanharze, Polyharnstoffharze, Polycarbonatharze oder Polyetherharze, wie sie beispielsweise in der EP-A 0 358 979, der EP-A 0 469 beschrieben sind 389, EP-A 0 496 205, EP-A 0 557 844, EP-A 0 583 728, WO 94/03511, WO 94/20559, WO 94/28043 oder WO 95/02005. Möglich ist auch die Verwendung beliebiger Hybriddispersionen oder beliebiger Mischungen verschiedener Polymerdispersionen.

Beispiele für geeignete hydroxyfunktionelle Polyacrylatdispersionen B1) sind die bekannten sogenannten sekundären Polyacrylatdispersionen, die in an sich bekannter Weise durch Copolymerisation von olefinisch ungesättigten Monomeren mit Hydroxylgruppen herstellbar sind Gruppen mit hydroxylfreien olefinischen Monomeren in organischen Lösungsmitteln, Neutralisation von möglicherweise eingebauten ionischen Gruppen und Dispersion in Wasser.

Beispiele für geeignete Monomere zur Herstellung der sekundären Polyacrylatdispersionen B1) sind beispielsweise Vinyl- und Vinylidenmonomere wie beispielsweise Styrol, α-Methylstyrol, o- und/oder p-Chlorstyrol-, o-, m- oder p-Methylstyrol-, p-tert-Butylstyrol-, Acrylsäure-, Acrylnitril-, Methacrylnitril-, Acryl- und Methacrylsäureester von Alkoholen mit bis zu 18 Kohlenstoffatomen, wie Methylacrylat, Ethylacrylat, n-Propylacrylat, Isopropylacrylat, n-Butylacrylat, Isobutylacrylat, tert-Butylacrylat, Amylacrylat, Hexylacrylat, 2-Ethylhexylacrylat, Isooctylacrylat, 3,3,5-Trimethylhexylacrylat, Stearylacrylat, Laurylacrylat, Cyclopentylacrylat, Cyclohexylacrylat, 4-tert-Butycyclohexylacrylat, Norbornylacrylat, Isobornylacrylat, Methylmethacrylat, Ethylmethacrylat, n-Propylmethacrylat, Isopropylmethacrylat, Butylmethacrylat, Isobutylmethacrylat, tert-Butylmethacrylat, Amylmethacrylat, Hexylmethacrylat 2-Ethylhexyl-methacrylat, Isooctylmethacrylat, 3,3,5-Trimethylhexylmethacrylat, Stearylmethacrylat, Laurylmethacrylat, Cyclopentylmethacrylat, Cyclohexylmethacrylat, 4-tert-Butycyclohexylmethacrylat, Norbornylmethacrylat oder Isobornylmethacrylat, Diester der Fumarsäure, Itaconsäure oder Maleinsäure Alkohole mit 4 bis 8 Kohlenstoffatomen, Acrylamid, Methacrylamid, Vinylester von Alkanmonocarbonsäuren mit 2 bis 5 Kohlenstoffatomen, wie Vinylacetat oder Vinylpropionat, carboxyfunktionelle radikalisch polymerisierte Monomere, wie Acrylsäure, Methacrylsäure, 1-Carboxyethylacrylat, Crotonsäure, Fumarsäure, Maleinsäure (anhydrid), Itaconsäure oder Monoalkylester von zweibasischen Säuren und / oder Anhydriden, wie Monoalkylmaleate, Hydroxyalkylester von Acrylsäure und Methacrylsäure mit 2 bis 6 Kohlenstoffatomen in der Hydroxyalkylreste, wie 2-Hydroxyethyl, 2-Hydroxypropyl, 3-Hydroxypropyl, 3-Hydroxybutyl, 4-Hydroxybutyl, Trimethylolpropanmono- oder -pentaerythritolmonoacrylat oder -methacrylat, Alkylenoxideinheiten enthaltende Hydroxylmonomere wie beispielsweise Anlagerungsprodukte von Ethylenoxid, Propylenoxid oder Butylenoxid an Acrylsäure oder Methacrylsäure sowie beliebige Gemische solcher beispielhaft genannter Monomere.

Ebenfalls geeignete olefinisch ungesättigte Monomere zur Herstellung der sekundären Polyacrylatdispersionen B1) sind alkylenoxideinheitenhaltige Vinylmonomere, wie Kondensationsprodukte von Acrylsäure oder Methacrylsäure mit Oligoalkylenoxid Monoalkylether sowie Monomere mit weiteren funktionellen Gruppen wie beispielsweise Epoxygruppen, Alkoxysilylgruppen, Harnstoffgruppen, Urethangruppen, Amidgruppen oder Nitrilgruppen sowie (Meth)acrylatmonomere und / oder Vinylmonomere mit einer Funktionalität von zwei oder mehr, wie beispielsweise Hexandioldi(meth)acrylat, das in geringen Mengen von beispielsweise bis zu 3 Gew.-%, bezogen auf die Summe der Monomere, mitverwendet werden kann.

Bevorzugte olefinisch ungesättigte Monomere zur Herstellung von sekundären Polyacrylatdispersionen B1) sind Methylmethacrylat, Styrol, Acrylsäure, Methacrylsäure, Butylacrylat, Butylmethacrylat, Ethylacrylat, tert-Butylacrylat, 2-Ethylhexylacrylat, 2-Ethylhexylmethacrylat, Hydroxyethylmethacrylat, Hydroxypropylmethacrylat, Hydroxyethylacrylat, Hydroxypropylacrylat, Hydroxybutylacrylat oder Hydroxybutylmethacrylat.

In den sekundären Polyacrylatdispersionen B1) liegt die Menge an carboxyfunktionellen Monomeren zwischen 0,8 und 5 Gew.-%, insbesondere zwischen 1,2 und 4 Gew.-%, und die Menge an hydroxyfunktionellen Monomere liegt zwischen 1 und 45 Gew.-%, vorzugsweise zwischen 6 und 30 Gew.-%.

Die für die erfindungsgemäßen Formulierungen geeigneten sekundären Polyacrylat-dispersionen B1) werden aus den olefinisch ungesättigten Monomeren in Gegenwart von an sich bekannten Polymerisationsinitiatoren hergestellt. Beispiele für geeignete Initiatoren sind Peroxyverbindungen wie Diacylperoxide, Alkylperester, Dialkylperoxide, Peroxydicarbonate, anorganische Peroxide oder auch Azoverbindungen.

Prinzipiell geeignet sind beliebige organische Lösungsmittel zur Herstellung der sekundären Polyacrylatdispersionen B1). Diese Lösungsmittel können in beliebigen Mengen eingesetzt werden, vorzugsweise jedoch in Mengen von weniger als 20 Gew.- %, bezogen auf die Summe der Monomeren. Bevorzugt sind Lösungsmittelgemische aus mindestens einem hydrophoben Lösungsmittel wie Lösungsmittelnaphtha, Toluol, Xylol, Kristalloel und mindestens einem hydrophilen Lösungsmittel wie Butylglykol, Butyldiglykol, Diethylenglykol, Propylenglykolmonomethylether oder Dipropylenglykolmonomethylether.

Die in das Copolymer eingebauten potentiell ionischen Gruppen, insbesondere Carboxylgruppen, werden üblicherweise mit geeigneten tertiären Aminen neutralisiert. Beispiele für geeignete neutralisierende Amine sind tertiäre Monoamine wie Trimethylamin, Triethylamin, Tripropylamin, Tributylamin, Ethyldiisopropylamin, Dimethylcyclohexylamin, N-Methylmorpholin, N-Ethylmorpholin, N-Methylpiperidin, N-Ethylpiperidin, tertiäre Diamine wie 1,3-Bis(dimethylamino)propan, 1,4-Bis(dimethylamino)butan oder N, N'-Dimethylpiperazin oder auch tertiäre Amine, die gegenüber Isocyanaten reaktive Gruppen tragen, beispielsweise Alkanolamine wie Dimethylethanolamin, Methyldiethanolamin, 2-Aminomethyl-2-methylpropanol oder zum Beispiel Triethanolamin.

Die sekundären Polyacrylatdispersionen B1) können nach beliebigen bekannten Verfahren des Standes der Technik hergestellt werden, beispielsweise in einem Feed-Verfahren, Batch-Verfahren oder in Kaskadenverfahren.

Nachdem die Copolymerlösung in Wasser dispergiert worden ist, kann das verwendete Lösungsmittel proportional oder vollständig durch Destillation entfernt werden.

Der pH-Wert der für die erfindungsgemäßen Beschichtungszusammensetzungen geeigneten sekundären Polyacrylatdispersionen B1) liegt vorzugsweise bei 5 bis 11, besonders bevorzugt bei 6 bis 10.

Die Feststoffgehalte der sekundären Polyacrylatdispersionen B 1) liegen bevorzugt bei 20 bis 60 Gew.-%, besonders bevorzugt 35 bis 55 Gew.-%. Die mittleren Teilchengrößen liegen im Allgemeinen bei 20 bis 400 nm.

Bei der Herstellung der sekundären Polyacrylatdispersionen können Reaktivverdünner, wie sie genannt werden, entweder anstelle von oder zusammen mit den Lösungsmitteln verwendet werden. Geeignete Reaktivverdünner sind beispielsweise bei Raumtemperatur flüssige Polyether mit einer Funktionalität von zwei oder drei, niedrigviskose Polyester wie Umsetzungsprodukte von 1 Mol einer Dicarbonsäure wie Dimerfettsäuren oder Adipinsäure, mit 2 Mol eines Diols oder Triols oder mit 2 Mol des Glycidylesters der Versaticsäure. Beispiele für weitere geeignete Reaktivverdünner sind Umsetzungsprodukte von ε-Caprolacton mit niedermolekularen Alkoholen sowie hydroxyfunktionelle Öle wie Ricinusöl.

Geeignete wässrige Polymerdispersionen B) für die erfindungsgemäßen Überzugsmittel sind beispielsweise auch sogenannte hydroxyfunktionelle primäre Polyacrylatdispersionen B2), die hergestellt werden können auf übliche Weise durch Copolymerisation von olefinisch ungesättigten Monomeren mit Hydroxylgruppen mit hydroxylgruppenfreien olefinischen Monomeren direkt in wäßriger Emulsion in Gegenwart geeigneter oberflächenaktiver Substanzen.

Geeignete primäre Polyacrylatdispersionen B2) und deren Herstellung sind beispielsweise in R. O. Athey Jr., Emulsion Polymer Technology, Dekker, New York, 1991, beschrieben.

Zur Herstellung derartiger primärer Polyacrylatdispersionen B2) geeignete Monomere umfassen grundsätzlich die bereits oben im Zusammenhang mit der Herstellung der sekundären Polyacrylatdispersionen B 1 genannten Monomere.

Bei der Emulsionspolymerisation werden die Polymerisationsinitiatoren in der Regel entweder vorgelegt und/oder parallel zugegeben, gegebenenfalls auch unter Zusatz von Vorschub und/oder Nachschub. Beispiele für geeignete Initiatoren sind Redoxsysteme, Peroxide, Persulfate und/oder Azoverbindungen wie Dibenzoylperoxid, Dicumenperoxid, Cumolhydroperoxid, Kaliumperoxodisulfat, Ammoniumperoxodisulfat, Azobisisobutyronitril oder Di-tert-butylperoxid.

Ebenfalls als wässrige Polymerdispersionen B) für die erfindungsgemäßen Überzugsmittel geeignet sind die an sich bekannten Hybridformen von Polyacrylatdispersionen, wie Polyester-Polyacrylatdispersionen B3). Diese Dispersionen enthalten sowohl Polyacrylatsegmente als auch Polyestersegmente und werden beispielsweise durch radikalische (Co)Polymerisation von Monomeren der oben genannten Art im Zusammenhang mit der Herstellung von sekundären Polyacrylatdispersionen B1) in der Anwesenheit einer Polyesterkomponente, eine Reaktion, die in Substanz oder vorzugsweise in organischer Lösung durchgeführt werden kann. Geeignete Polyesterkomponenten werden nachfolgend als mögliche Synthesekomponenten zur Herstellung der Polyurethan-Dispersionen B4) beschrieben.

Als wässrige Polymerdispersionen B) geeignete Polyester-Polyacrylat-Dispersionen B3) enthalten bevorzugt einen Polyesteranteil von 10 bis 75 Gew.-%, besonders bevorzugt von 20 bis 60 Gew.-%, bezogen auf der Gesamtfeststoffgehalt der Dispersion.

Als wässrige Polymerdispersionen B) für die erfindungsgemäßen Überzugsmittel eignen sich auch Polyurethan-Dispersionen B4). Bei diesen Dispersionen handelt es sich um die an sich bekannten, im Allgemeinen selbstemulgierenden Polyurethane oder Polyurethan-Polyharnstoffe in wässriger Form.

Selbstemulgierende Polyurethane enthalten ionische und/oder nichtionische hydrophile Gruppen in der Polymerkette, wobei diese Gruppen entweder direkt in die Polymerkette oder auch seitenständig oder endständig eingebaut sein können.

Geeignete Polyurethan-Dispersionen B4) können nach dem Fachmann bekannten Methoden erhalten werden, indem ein Polyurethan oder ein Polyurethan-Prepolymer in der Schmelze oder in organischer Lösung hergestellt und anschließend darin dispergiert wird Wasser, wobei gegebenenfalls eine Kettenverlängerungsreaktion zur Erhöhung des Molekulargewichts in organischer Lösung parallel zum Dispergierschritt oder nach dem Dispergierschritt durchgeführt werden kann.

Bei der Herstellung geeigneter Polyurethandispersionen B4) kann der Einbau von hydrophilen Gruppen in das Polyurethan mit verschiedenen gegenüber Isocyanatgruppen reaktiven Verbindungen erfolgen, die potentiell ionisch und/oder nicht ionisch sind, beispielsweise durch Einarbeitung von Hydroxycarbonsäuren, wie Dimethylolessigsäure, 2,2-Dimethylolpropionsäure, 2,2-Dimethylbuttersäure, 2,2-Dimethylolpentansäure, Dihydroxysuccinsäure, Hydroxypivalinsäure oder Gemischen solcher Säuren, Aminocarbonsäuren Säuren, wie die Michael-Addukte von Isophorondiamin oder Ethylendiamin an Acrylsäure, Aminosulfonsäuren, wie Aminoethylethansulfonsäure, hydroxy- oder aminofunktionelle Phosphonsäuren und/oder mono-, di- oder trifunktionelle Polyethylenoxideinheiten des Molekulargewichtsbereichs 350 bis 2500 g/mol ist auch die Verwendung von Gemischen solcher Verbindungen möglich.

Besonders geeignete hydrophile Einheiten sind Dimethylolpropionsäure, Dimethylolbuttersäure, mono- oder dihydroxyfunktionelle Polyethylenoxideinheiten des oben angegebenen Molekulargewichtsbereichs sowie hydroxyfunktionelle oder aminofunktionelle Sulfonsäuren und/oder Sulfonate.

Als Neutralisationsmittel dieser hydrophilen Einheiten dienen vorzugsweise tertiäre Amine und/oder tertiäre Aminoalkohole, wie sie vorstehend als Neutralisationsamine für geeignete sekundäre Polyacrylatdispersionen B1) beschrieben sind.

Zur Herstellung geeigneter Polyurethan-Dispersionen B4) werden beliebige aliphatische, cycloaliphatische, araliphatische und/oder aromatische Di- und/oder Polyisocyanate eingesetzt, wie sie beispielsweise bereits oben als Ausgangsverbindung genannt wurden.

Bevorzugt ist die Verwendung von Isophorondiisocyanat, 4,4'-Diisocyanatodicyclohexylmethan und/oder Hexamethylendiisocyanat.

Weitere Synthesekomponenten zur Herstellung geeigneter Polyurethandispersionen B4) sind Polyester-, Polyesteramid-, Polyacetal-, Polyether-, Polysiloxan- und/oder Polycarbonatpolyole des Molekulargewichtsbereichs 500 bis 18 000 g/mol mit einer Funktionalität von 1 bis 5, vorzugsweise von 2 bis 2,5.

Geeignete Polyesterpolyole zur Herstellung der Polyurethan-Dispersionen B4) sind beispielsweise solche mit einer mittleren Funktionalität von 1,5 bis 5, wie sie in bekannter Weise durch Umsetzung von aliphatischen Verbindungen herstellbar sind cycloaliphatische oder aromatische Dicarbonsäuren und / oder Polycarbonsäuren und / oder deren Anhydride, wie Bernsteinsäure, Glutarsäure, Adipinsäure, Sebacinsäure, Pimelinsäure, Subinsäure, Azelainsäure, Nonandicarbonsäure, Decandicarbonsäure, Phthalsäure, Isophthalsäure B. Hexahydrophthalsäure, Trimellithsäure, Phthalsäureanhydrid, Tetrahydrophthalsäure, Maleinsäure, Maleinsäureanhydrid, Fumarsäure, Dimer- und Trimerefettsäuren, Dimethylterephthalat und Bisglykolterephthalat, mit mehrwertigen Alkoholen wie 1,2-Ethandiol, 1 2- und 1,3-Propandiol, das isomere Butandiol, Pentandiol, Hexandiol, Heptandiol und Octandiol, 1,10-Decandiol, 1,12-Dodecandiol, 1,2- und 1,4-Cyclohexandiol, 1,4-Cyclohexandimethanol-4,4'-(1-methylethyliden)biscyclohexanol, Diethylenglykol, Triethylenglykol, Tetraethylenglykol, 1,2-Propandiol, Dipropylenglykol, Tripropylenglykol, Tetrapropylenglykol, 1,2,3-Propantriol, 1,1,1-Trimethylolethan, 1,2,6-Beispielsweise Hexantriol, 1,1,1-Trimethylolpropan, 2,2-Bis(hydroxymethyl)-1,3-propandiol und / oder 1,3,5-Tris(2-hydroxyethyl)isocyanurat.

Geeignete Polyesterpolyole sind beispielsweise auch solche, die auf übliche Weise aus Lactonen und einzelnen mehrwertigen Alkoholen herstellbar sind, wie sie oben beispielhaft als Startermoleküle mit Ringöffnung aufgeführt sind. Beispiele für geeignete Lactone zur Herstellung dieser Polyesterpolyole sind beta-Propiolacton, gamma-Butyrolacton, gamma- und delta-Valerolacton, ε-Caprolacton, 3,5,5- und 3,3,5-Trimethylcaprolacton oder beliebige Gemische solcher Lactone.

Geeignete Polycarbonatpolyole zur Herstellung der Polyurethan-Dispersionen B4) sind insbesondere die an sich bekannten Umsetzungsprodukte von zweiwertigen Alkoholen, wie beispielsweise die oben genannten in der Liste der mehrwertigen Alkohole, mit Diarylcarbonaten, wie beispielsweise Diphenylcarbonat, Dimethylcarbonat oder Phosgen. Weitere geeignete Polycarbonatpolyole sind solche, die neben Carbonatstrukturen zusätzlich Estergruppen enthalten. Dies sind insbesondere die an sich bekannten Polyestercarbonatdiole, wie sie beispielsweise nach der Lehre der DE-B 1 770 245 durch Umsetzung von zweiwertigen Alkoholen mit Lactonen, wie insbesondere ε-Caprolacton, und erhältlich sind anschließende Umsetzung der entstandenen Polyesterdiole mit Diphenyl oder Dimethylcarbonat. Ebenfalls geeignet sind Polycarbonatpolyole, die neben Carbonatstrukturen Ethergruppen enthalten. Dies sind insbesondere die an sich bekannten Polyethercarbonatpolyole, wie sie beispielsweise nach der Methode der EP-A 2046861 durch katalytische Umsetzung von Alkylenoxiden und Kohlendioxid in Gegenwart von H-funktionellen Startermolekülen erhältlich sind.

Geeignete Polyetherpolyole zur Herstellung der Polyurethan-Dispersionen B4) sind beispielsweise solche, die in an sich bekannter Weise durch Alkoxylierung geeigneter Startermoleküle erhältlich sind. Zur Herstellung dieser Polyetherpolyole können als Startermoleküle beliebige mehrwertige Alkohole, beispielsweise solche aus dem Molekulargewichtsbereich von 62 bis 400, der oben im Hinblick auf die Herstellung von Polyesterpolyolen beschriebenen Art eingesetzt werden. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Weitere ebenfalls geeignete Polyetherpolyole sind die Polytetramethylenetherglykole, die beispielsweise nach Angew. Chem. 72, 927 (1960) durch Polymerisation von Tetrahydrofuran hergestellt und die zahlenmittlere Molekulargewichte von 400 g/mol bis 4000 g/mol aufweisen.

Zur Herstellung geeigneter Polyurethan-Dispersionen B4) können weiterhin Blockcopolymere auf Basis der genannten Polyole eingesetzt werden, beispielsweise Polyether-Polyester-Copolymere, Polycarbonat-Polyester-Copolymere oder Polycarbonat/Polyether-Copolymere.

Bevorzugte Polyole zur Herstellung geeigneter Polyurethan-Dispersionen B4) sind Polyesterpolyole, Polycarbonatpolyole und/oder C3- und/oder C4-Polyetherpolyole.

Bei der Herstellung geeigneter Polyurethan-Dispersionen B4) können gegebenenfalls auch niedermolekulare Alkohole mit einer Funktionalität von 2 bis 4 eingesetzt werden. Hierbei handelt es sich insbesondere um Verbindungen mit einem Molekulargewicht 500 g/mol, beispielsweise die einfachen mehrwertigen Alkohole der oben als Synthesekomponenten für Polyesterpolyole genannten Art oder Aminoalkohole wie beispielsweise Diethanolamin, Ethanolamin, Diisopropanolamin, Propanolamin, die gegebenenfalls auch ethoxyliert vorliegen können und/oder propoxylierte Form sowie beliebige Gemische solcher Alkohole.

Bei der Herstellung geeigneter Polyurethan-Dispersionen B4) werden im Allgemeinen als Kettenverlängerer bekannte Verbindungen eingesetzt. Bei diesen Kettenverlängerungsmitteln handelt es sich insbesondere um Diamine, Polyamine und/oder Aminoalkohole wie Diethanolamin, 1,2-Diaminopropan, 1,4-Diaminobutan, 2,5-Diamino-2,5-dimethylhexan, 1,5-Diamino-2-Methylpentan, 1,6-Diaminohexan, 2,2,4- und/oder 2,4,4-Trimethyl-1,6-diaminohexan, 1,11-Diaminoundecan, 1,12-Diaminododecan, Triaminononan, Ethylendiamin, Isophorondiamin, Diethylentriamin, Hydrazin, Adipindihydrazid, Hydroxyethylethylendiamin, Bishydroxyethylethylendiamin, Aminopropanol, Aminoalkoxysilane und beliebige Mischungen solcher Verbindungen.

Geeignete Polyurethan-Dispersionen B4) können unter Verwendung geeigneter Lösungsmittel hergestellt werden. Beispiele für geeignete Lösungsmittel sind Aceton, Methylethylketon, N-Methylpyrrolidon und/oder N-Ethylpyrrolidon.

Geeignete Polyurethan-Dispersionen B4) können hergestellt werden, um die Reaktion zu beschleunigen oder spezielle Effekte zu erzielen, auch unter Verwendung von in der Polyurethanchemie üblichen Katalysatoren wie Dibutylzinndilaurat, Dibutylzinnoxid, Zinndioctoat, Zinnchlorid und/oder tertiäre Amine.

Üblicherweise werden bei der Herstellung der Polyurethan-Dispersionen in Schmelze oder organischer Lösung Diisocyanate und/oder Polyisocyanate mit Polyolen und hydrophilen Einheiten der genannten Art zu einem isocyanatfunktionellen Prepolymer umgesetzt wird, das anschließend entweder in der Schmelze, in organischer Lösung oder in wässriger Dispersion, mit einem Kettenverlängerer des angegebenen Typs, um ein Polyurethan mit hohem Molekulargewicht zu bilden, das dispergierbar und/oder in Wasser dispergiert ist, weiter umgesetzt wird.

Eventuell verwendetes Lösungsmittel kann nach der Dispergierung ganz oder teilweise abdestilliert werden.

Geeignete Polyurethan-Dispersionen B4) für die erfindungsgemäßen Beschichtungszusammensetzungen weisen bevorzugt Feststoffgehalte von 25 bis 60 Gew.-%, pH-Werte von 5,5 bis 11 und/oder mittlere Teilchengrößen von 20 auf 500 nm auf.

Weitere geeignete wässrige Polymerisatdispersionen B) für die erfindungsgemäßen Formulierungen sind Polyesterdispersionen und Polyesterlösungen B5), wie sie durch Dispergieren geeigneter wasserverdünnbarer Polyesterpolyole in Wasser erhalten werden.

Beispiele für geeignete wasserverdünnbare Polyesterpolyole sind die beispielsweise aus der Lacktechnologie bekannten Dispergierharze, die sehr gute Pigmentbenetzungs- und/oder Pigmentaffinitätsqualitäten aufweisen und Säurezahlen im Bereich von 25 bis 75 mg KOH/g, Hydroxylgruppengehalte von 2,5 bis 10 Gew.-%, Molekulargewichte im Bereich von 750 bis 5000 g/mol und/oder Fettsäurebestandteile in Mengen von 15 bis 50 Gew.-%, aufweisen.

Geeignete Polyesterdispersionen und -lösungen B5) für die erfindungsgemäßen Formulierungen werden beispielsweise durch Umsetzung von Polyester-Polyolen erhalten, beispielsweise wie oben als Synthesekomponenten zur Herstellung beschrieben Polyurethan-Dispersionen B4) mit Säureanhydriden wie Phthalsäureanhydrid, Hexahydrophthalsäureanhydrid, Tetrahydrophthalsäureanhydrid, Maleinsäureanhydrid, Trimellithsäureanhydrid oder Pyromellithsäureanhydrid, wobei die Umsetzung beispielsweise so durchgeführt wird, dass die Säureanhydride mit einem Teil der Hydroxylgruppen unter Ringöffnung des Anhydrids und Einbau in den Polyester reagieren. Auf diese Weise werden hydroxyfunktionelle und gleichzeitig carboxyfunktionelle Polyester erhalten, die nach vollständiger oder proportionaler Neutralisation der Carboxylgruppen in Wasser gelöst oder dispergiert werden können. Man erhält wässrige Polyesterdispersionen oder -lösungen B5) mit mittleren Teilchengrößen von 10 bis 200, vorzugsweise von 25 bis 100 nm.

Allgemein gesagt handelt es sich bei den in den erfindungsgemäßen Beschichtungsmitteln verwendeten wässrigen Polymerdispersionen B) um Dispersionen der genannten Art, die hydroxy- und/oder aminofunktionell sind. Möglich ist jedoch auch die Verwendung von nichtfunktionellen Polymerdispersionen B) als Bindemittelkomponente in den erfindungsgemäßen Beschichtungsmitteln.

Die in den erfindungsgemäßen Beschichtungsmitteln verwendete wässrige Polymerdispersion B) enthält vorzugsweise mindestens eine wässrige sekundäre Polyacrylatdispersion B1), eine Polyester-Polyacrylatdispersion B3) auf Basis von Polyesterpolyolen, Polycarbonatpolyolen und/oder C₃- oder C₄-Polyetherpolyole.

Bevorzugt werden in den erfindungsgemäßen Beschichtungsmitteln hydroxyfunktionelle wässrige Polymerdispersionen B) eingesetzt, die, bezogen auf Harzfeststoffe, einen Hydroxylgruppengehalt von 0,5 bis 7,0 Gew.-%, bevorzugt 0,5 bis 6,0 Gew.-%, besonders bevorzugt 1,0 bis 5,0 Gew.-%, Säurezahlen von weniger als 50 mg KOH/g, bevorzugt weniger als 40 mg KOH/g, besonders bevorzugt weniger als 30 mg KOH/g und/oder zahlenmittlere Molekulargewichte Mn, wie durch Gelpermeationschromatographie bestimmt, von 500 bis 30 000 g/mol, bevorzugt 1000 bis 15 000 g/mol, besonders bevorzugt 1500 bis 10 000 g/mol, aufweisen.

In der erfindungsgemäßen Ausführungsform, dass eine wässrige 2-Komponentenformulierung vorliegt, kann des Weiteren in Komponente B auch mindestens ein Emulgator vorliegen. Geeignete externe und interne Emulgatoren sind dem Fachmann an sich bekannt und beispielsweise beschrieben in "Polyurethanes - Coatings, Adhesives and Sealants", 2019, Meier-Westhues, Danielmeier, Kruppa, Squiller, Vincentz Network GmbH, S. 48-51. Besonders geeignete Emulgatoren enthalten entweder funktionelle Gruppen, die durch Neutralisationsmittel und/oder Quaternisierungsmittel in Kationen überführt werden können, und/oder kationische Gruppen oder funktionelle Gruppen, die durch Neutralisationsmittel in Anionen überführt werden können, und/oder anionische Gruppen und/oder nicht ionische hydrophile Gruppen.

Des Weiteren betrifft die vorliegende Erfindung die Verwendung des erfindungsgemäßen NCO-terminierten Polysiloxanprepolymer als Härter in einer Lackformulierung. Das bezüglich der erfindungsgemäßen 2-Komponentenformulierung gilt hier entsprechend für Mengen und weitere vorhandene Komponenten.

### Beispiele

Alle Versuche wurden, soweit nicht anders angegeben, bei 23 °C und 50% relativer Feuchtigkeit durchgeführt.

Die Bestimmung der NCO-Gehalte erfolgte titrimetrisch nach DIN EN ISO 11909:2007-05.

OH-Zahlen wurden titrimetrisch nach DIN 53240-2:2007-11 bestimmt.

Säure-Zahlen wurden nach DIN EN ISO 2114:2002-06 bestimmt.

Die angegebenen OH-Gehalte wurden aus den analytisch ermittelten OH-Zahlen errechnet. Die angegebenen Werte beziehen sich jeweils auf das Gesamtgewicht der jeweiligen Zusammensetzung inklusive gegebenenfalls mitverwendeter Lösungsmittel.

Die Restmonomergehalte wurden nach DIN EN ISO 10283:2007-11 gaschromatographisch mit internem Standard gemessen.

Der Festkörpergehalt wurde nach DIN EN ISO 3251:2008-06 bestimmt.

Die Trocknungszeiten (T1, T3 und T4) wurden gemäß DIN EN ISO 9117-5:2010-07, Trocknungsprüfung Teil 5: Abgewandeltes Bandow-Wolff-Verfahren, bestimmt.

Die Viskosität wurde bei 23 °C nach DIN EN ISO 3219/A:1994-10 ermittelt. Falls nicht anders angegeben, handelt es sich um die dynamische Viskosität.

Das zahlenmittlere Molekulargewicht Mn wird bestimmt durch Gelpermeationschromatographie (GPC) in Tetrahydrofuran bei 23 °C. Es wird dabei vorgegangen nach DIN 55672-1:2016-03: "Gelpermeationschromatographie, Teil 1 - Tetrahydrofuran als Elutionsmittel" (SECurity GPC-System von PSS Polymer Service, Flussrate 0,6 ml/min; Säulen: 2×PSS SDV (100A), 2xPSS SDV (50A,), 8×300 mm, 5 µm; RID-Detektor (RI-Agilent 1260). Dabei werden Polystyrolproben bekannter Molmasse zur Kalibrierung verwendet. Die Berechnung des zahlenmittleren Molekulargewichts erfolgt softwaregestützt.

Der Glanz bei 20° der erhaltenen Beschichtungen wurde reflektometrisch nach DIN EN ISO 2813:2015-02 bestimmt.

Der Kondenswassertest wurden entsprechend DIN EN ISO 6270-2 CH:2018-04 durchgeführt.

Der Kontaktwinkel wurde entsprechend DIN 55660-2:2011-12 bestimmt. Für jeden Wert wurden 10 Punkte auf der Platte der Kontaktwinkel mit Wasser untersucht und der Mittelwert dieser Messungen angegeben.

Die Nasskratzbeständigkeit der Beschichtungen wurde mittels einer Labor-Waschanlage nach DIN EN ISO 20566:2013-06 geprüft. Angegeben wird der Glanzverlust in Gloss Units (GU) nach Verkratzung (10 Zyklen). Je geringer der Glanzverlust in GU, desto widerstandsfähiger ist die Beschichtung gegen Nassverkratzung.

Die Beständigkeit gegenüber eine Trockenverkratzung wurde mittels eines Linearhubgeräts (Crockmeter) nach DIN 55654:2015-08 durchgeführt. Dabei wurde ein Gewicht (950 g), das an seiner flachen Unterseite mit Polishing Paper (Firma 3M, Grade: 9 MIC) bespannt war, ohne die Beschichtung zu verkratzen auf die Beschichtung gesetzt und anschließend maschinell in einer Spur über die Beschichtung geführt. Es wurden jeweils 10 bzw. 20 Doppelhübe durchgeführt. Nach der Belastung mit dem Verkratzungsmedium wurde die Prüffläche mit einem weichen Tuch gereinigt und anschließend der Glanz an drei verschiedenen Stellen quer zur Verkratzungsrichtung gemessen. Je geringer der aus dem Mittelwert dieser Messung berechnete Glanzverlust GU, desto widerstandsfähiger ist die Beschichtung gegen Verkratzung.

Die Bestimmung der Pendeldämpfung nach König erfolgte nach DIN EN ISO 1522:2007-04 auf Glasplatten.

Die beschriebenen Beschichtungen wurden spritzappliziert. Die Trockenfilmdicke betrug bei allen Filmen 35 bis 40 µm.

Die Lösungsmittel- und Wasserbeständigkeit wurden nach DIN EN ISO 4628-1:2016-07 ermittelt. Für den Test der Lösemittelbeständigkeit wurden die Lösemittel Xylol, folgend auch als "Xy" abgekürzt, Methoxypropylacetat (MPA), Ethylacetat (EA) und Aceton (Ac) verwendet. Die Kontaktzeit betrug jeweils 5 min. Für die Messung der Wasserbeständigkeit betrug die Kontaktzeit jeweils 24 h. Die Abmusterung wurde entsprechend der angeführten Norm durchgeführt. Die Prüffläche wird visuell und durch Verkratzung beurteilt, dabei wird folgende Klassifikation vorgenommen: 0 = Keine Veränderung feststellbar; 1 = Quellungsring, Oberfläche hart, nur sichtbare Veränderung; 2 = Quellungsring, geringe Erweichung; 3 = deutliche Erweichung (evtl. geringe Blasenbildung); 4 = Starke Erweichung (evtl. starke Blasenbildung), durchritzbar bis zum Untergrund; 5 = Beschichtung komplett zerstört ohne Fremdeinwirkung.

Das Rückfließverhalten (Reflow) bezeichnet die Erholung einer verkratzen Beschichtungsoberfläche nach Temperatureinwirkung bezogen auf den Glanzwert. Ein Beschichtungsmittel wird mittels Nass- bzw. Trockenverkratzung verkratzt. Der Restglanz wurde nach dem Verkratzungszyklus bestimmt. Die Beschichtung wurde 2h, bei 60 °C in den Ofen gelegt und der Glanz anschließend nach dem zuvor beschriebenen Verfahren ermittelt. Der Reflow wird in Prozent angegeben, d.h. Verhältnis von Restglanz zu Reflow-Wert.

Der Kontaktwinkel wurde entsprechend DIN 55660-2:2011-12 durchgeführt.

In den Beispielen und Vergleichsbeispielen wurden die folgenden Reagenzien eingesetzt:

### Diisocyanate:

1,6-Hexamethylendiisocyanat (HDI) und Isophorondiisocyanat (IPDI) wurden von der Fa. Covestro bezogen und ohne Aufreinigung eingesetzt.

### Polyole:

Polyol 1 basiert auf einem Polyetherdiol (Dianol^{®} 320 HP, Feststoff), der sekundäre OH-Gruppen enthält und einen Hydroxywert von 325 mgKOH/g). Umsetzung mit Propylenoxid ergibt Polyol 1 mit einem Molekluargewicht von 550 g/mol.

Polyol 2 ist ein Polyesterpolyol, aufgebaut aus Hexandiol, Butandiol, Adipinsäure und Propandiol mit einer Funktionalität von 2, einem Molekulargewicht von ca. 400 g/mol und einem OH-Gehalt von ca. 8 Gew und einer Viskosität von 800 mPa·s

Polyol 3 ist ein Polyacrylatpolyol, aufgebaut aus Methylmethacrylat, Acrylsäure, Styrol und Hydroxyethylmethacrylat mit einem OH-Gehalt von 2,8 Gew.-%, bezogen auf den Festkörper, gelöst in Butylacetat mit einem Festkörpergehalt von 75 Gew.-%. Die Viskosität beträgt 5000 mPa·s.

Polyol 4 ist ein ist ein α,ω-Hydroxypropyl-terminiertes Polydimethylsiloxan (Baysilone OF OH 702 (4 Gew.-%)) mit einem OH-Gehalt von 4 Gew.%, einem Molekulargewicht von 600 bis 800 g/mol. Die klare Flüssigkeit hat eine kinematische Viskosität von 37 mm²·s⁻¹

Polyol 5 ist eine aliphatische, hydroxyfunktionelle Polycarbonatpolyesterpolyurethandispersion. Sie wurde von der Fa. Covestro bezogen und hat folgende Kenndaten:

| | |
|---|---|
| Viskosität: | 300-1500 mPa·s |
| Nicht-flüchtiger Anteil: | 50.0-54.0% |
| OH-Gehalt: | ca. 1% |

Polyol 6 ist eine Polyesterpolyacrylatdisperion. Sie wurde von der Fa. Covestro bezogen und hat folgende Kenndaten:

| | |
|---|---|
| Viskosität: | 700-7.200 mPa·s |
| Nicht-flüchtiger Anteil: | 41-43% |
| OH-Gehalt: | 3,8% |

Polyol 7 ist eine Polyacrylatpolyol. Es wurde von der Fa. Allnex bezogen und wird unter dem Handelsnamen Setalux DA 870 BA vertrieben und hat folgende Kenndaten:

| | |
|---|---|
| Viskosität: | 3500 mPa.s |
| Nicht-flüchtiger Anteil: | 70% |
| OH-Gehalt: | 4,2% (auf Festkörper) |

Amin 1 ist ein sekundäres Amin, das aus 4,4'-Methylenbis(cyclohexylamin) und Maleinsäurediethylester hergestellt wurde und folgende Kenndaten hat:

| | |
|---|---|
| Aminzahl: | 200 mg KOH/g |
| Viskosität (25 °C): | 900-2.000 mPa·s |
| Farbzahl (Hazen): | ≤ 250 |

TMP steht für 1,1,1-Trimethylolpropan, einem trifunktionalen Polyol mit einem Molekulargewicht von 134 g/mol.

### Polyisocyanate:

Polyisocyanat 1 ist ein Trimer von 1,6-Hexamethylendiisocyanat mit einer Funktionalität von 2,8 bis 3,6, einem NCO-Gehalt von 23 Gew.-%, einem Äquivalentgewicht von 183 g/mol und einer Viskosität von 1200 mPa·s

Polyisocyanat 2 ist ein Trimer von 1,6-Hexamethylendiisocyanat mit einer Funktionalität von 2,8 bis 3,6, einem NCO-Gehalt von 21,8 Gew.-%, einer Viskosität von 3000 mPa·s und einem Äquivalentgewicht von 193 g/mol.

Polyisocyanat 3 ist ein Allophanat auf Basis von 1,6-Hexamethylendiisocyanat und Propanol/Butanol mit einer Funktionalität von 2,0 bis 2,8, einem Äquivalentgewicht von 215 g/mol und einer Viskosität von 500 mPa·s.

Polyisocyanat 4 ist ein Trimer von Isophorondiisocyanat mit einer Funktionalität von 2,8 bis 3,6, einem NCO-Gehalt von 11,9%, einem Festkörper von 70%, Solvent Naptha 100 (30 Gew.-%), einem Äquivalentgewicht von 360 g/mol und einer Viskosität von 1.600 mPa·s und.

Polyisocyanat 5 ist eine ionisch hydrophilisiertes Polyisocyanat basierend auf einem HDI-Trimer und einem Hydrophilisierungsmittel auf Sulfonatbasis, mit einer Funktionalität von ≤ 2,8, einem NCO-Gehalt von 20,3 Gew.-% und einer Viskosität von 3500 mPa·s.

### Additive und Katalysatoren:

Tinuvin 292, eine Mischung Bis(1,2,2,6,6-pentamethyl-4-piperidyl)sebacat (509 g/mol) und Methyl-1,2,2,6,6-pentamethyl-4-piperidylsebacat (370 g/moL), ist ein Lichtschutzmittel auf Basis eines sterisch gehinderten Amins. Die Viskosität beträgt 400 mPa·s. Das Produkt wurde von der Fa. BASF bezogen und ohne weitere Aufreinigung eingesetzt.

Tinuvin 1130, eine Mischung aus β-[3-(2-H-Benzotriazol-2-yl)-4-hydroxy-5-tert.butylphenyl]-propionsäurepoly(ethylenglycol)-300-ester (637 g/mol) undBis{b-[3-(2-H-Benzotriazole-2-yl)-4-hydroxy-5-tert.butylphenyl]-propionsäure)-poly(ethylenglycol)300-ester (975 g/mol), ist ein UV-Absorber. Die Viskosität beträgt 7400 mPa·s. Das Produkt wurde von der Fa. BASF bezogen und ohne weitere Aufreinigung eingesetzt.

BYK^{®} 141 (Festkörper Lieferform: 96,8%) , BYK^{®} 331 (Festkörper Lieferform 100%) und BYK ^{®}348 (Festkörper Lieferform 100%) sind silikonhaltige Verlaufsmittel, aufgebaut aus einem Silioxan und einem Polyether, kovalent verbunden. Die Produkte wurde von der Fa. BYK bezogen.

Addocat^{®} 201 ist ein Standardkatalysator auf Basis Dibutylzinndilaurat (DBTL), eingesetzt in einer Konzentration von 0,03 Gew.-% auf einem festen Bindemittel. Der Katalysator wurde von der Fa. Lanxess bezogen.

Lucrafoam^{®} DNE 01 ist ein auf Mineralöl-basierender Entschäumer, der in allen pH-Bereichen eingesetzt wird. Der Entschäumer wurde von der Fa. Levaco Chemicals bezogen.

Tego^{®}-Wet KL 245 ist ein Siloxan-basierendes Benetzungsmittel mit einem aktiven Gehalt von 100%. Es wurde von der Fa. Evonik Industries bezogen.

Aquacer 513 ist eine VOC-freie Wachsemulsion auf Basis von HDPE zur Verbesserung des Oberflächenschutzes in wässrigen Medien. Die Wachsemulsion wurde von der Fa. BYK bezogen.

Decosoft Transparent^{®} 7 D sind hochvernetzte aliphatische Polyurethanpartikel (100%), die einen soft-feel-Effekt sowie eine Mattierung der Beschichtung verleihen. Das Produkt wurde von der Fa. Microchem bezogen.

Matting agent Acematt^{®} 3300 ACEMATT 3300 ist eine, mit speziellem Polymer nachbehandelte, pyrogene Kieselsäure. Dieses Mattierungsmittel zeichnet sich durch höchste Mattierungseffizienz bei hoher Transparenz aus.

Lösungsmittel wie Butylacetat (BA) und Methoxypropylacetat (MPA) wurden von der Firma Azelis bezogen.

### Beispiel 1 (erfindungsgemäß)

441 g HDI wurden vorgelegt und auf 105 °C erwärmt. Nach Zugabe von 280 g Baysilon OFOH 702 wurde das Reaktionsgemisch 3 h bei 100 °C unter Stickstoffatmosphäre gerührt. Nach 2 h Nachrührzeit bei 110 °C wurde das nicht umgesetzte monomere HDI bei einer Temperatur von 150 °C und einem Druck von 0,1 mbar im Dünnschichtverdampfer abgetrennt. Ein praktisch farbloses, klares NCO-terminiertes Prepolymer mit folgenden Kenndaten wurde erhalten.

| | |
|---|---|
| NCO-Gehalt: | 6,65 Gew.-% |
| Festkörperanteil: | 100% |
| Viskosität | 320 mPa·s |
| HDI: | < 0,3 Gew.-% |

### Beispiel 2 (erfindungsgemäß)

583 g IDPI wurden vorgelegt und auf 105 °C erwärmt. Nach Zugabe von 280 g Baysilon OFOH 102 wurde das Reaktionsgemisch 3 h bei 100 °C unter Stickstoffatmosphäre gerührt. Nach 2 h Nachrührzeit bei 110 °C wurde das nicht umgesetzte monomere HDI bei einer Temperatur von 150°C und einem Druck von 0,1 mbar im Dünnschichtverdampfer abgetrennt. Ein praktisch farbloses, klares NCO-terminiertes Prepolymer (425 g) mit folgenden Kenndaten wurde erhalten.

| | |
|---|---|
| NCO-Gehalt: | 7,35 Gew.-% |
| Festkörperanteil: | 100% |
| Viskosität | 3.500 |
| IPDI: | < 0,3 Gew.-% |

### Beispiel 3 (Vergleichsbeispiel, Eintopfreaktion)

756 g Desmodur H wurden vorgelegt, auf 105 °C erwärmt. Dann wurde ein Gemisch aus 8 g TMP, 33 g Polyol 1 und 120 g Polyol 4 zugegeben, und das Reaktionsgemisch wurde 2 h bei 110 °C unter Stickstoffatmosphäre gerührt. Nach 2 h Nachrührzeit bei 110 °C wurde das nicht umgesetzte monomere HDI bei einer Temperatur von 130 °C und einem Druck von 0,1 mbar im Dünnschichtverdampfer abgetrennt. Ein praktisch farbloses, klares NCO-terminiertes Prepolymer mit folgenden Kenndaten wurde erhalten.

| | |
|---|---|
| NCO-Gehalt: | 9,5% |
| Festkörperanteil: | 100% |
| Viskosität | 960 mPa·s |

### Beispiel 4 (erfindungsgemäß)

30,5 g des Produktes aus Beispiel 1 wurden mit 21,3 g Polyol 2, 50% Gew.-% in MPA gelöst, und in Gegenwart des Addocat 201 (0,03 Gew.-%) umgesetzt. Die Reaktion wurde bei 60 °C unter Stickstoffatmosphäre durchgeführt. Nachdem ein NCO-Gehalt von weniger als 0,1 Gew.-% gemessen wurde, wurden 55,5 g Desmodur N3600 zugegeben und das Reaktionsgemisch auf einen Festkörperanteil von 50 Gew.-% mit MPA eingestellt. Die Reaktion wurde bei 60 °C durchgeführt, bis ein NCO-Gehalt von 4,9 Gew.-% erreicht wurde. Ein praktisch farbloses, klares NCO-terminiertes Prepolymer mit folgenden Kenndaten wurde erhalten.

| | |
|---|---|
| NCO-Gehalt: | 4,9% |
| Festkörperanteil: | 50% |
| Viskosität | 190 mPa·s |

### Beispiel 5 (erfindungsgemäß)

15,25 g des Produktes aus Beispiel 1 wurden mit 3,35 g 1,1,1-Trimethylolpropan, 50 Gew.-% in MPA gelöst, in Gegenwart des Addocat 201 (0,03 Gew.-%) umgesetzt. Nachdem ein NCO-Gehalt von kleiner als 0,1 Gew.-% gemessen wurde, wurden 82,5 g Polyisocyanat 3 hinzugegeben, und das Reaktionsgemisch wurde auf einen Festkörperanteil von 50 Gew.-% mit MPA eingestellt. Die Reaktion fand unter Rühren bei 60 °C statt, bis ein NCO-Gehalt von 6,8 Gew.-% erreicht wurde. Ein praktisch farbloses, klares NCO-terminiertes Prepolymer mit folgenden Kenndaten wurde erhalten.

| | |
|---|---|
| NCO-Gehalt: | 6,75 Gew.-% |
| Festkörperanteil: | 50 Gew.-% |
| Viskosität | 232 mPa·s |

### Beispiel 6 (erfindungsgemäß)

15,3 g des Produktes aus Beispiel 1 wurden mit 3,35 g 1,1,1-Trimethylolpropan, 50 Gew.-% in MPA gelöst, in Gegenwart des Addocat 201 (0,03 Gew.-%) umgesetzt. Nachdem ein NCO-Gehalt von kleiner als 0,1 Gew.-% gemessen wurde, wurden 92,5 g Polyisocyanat 1 hinzugegeben und das Reaktionsgemisch auf einen Festkörperanteil von 50 Gew.-% mit MPA eingestellt. Die Reaktion fand unter Rühren bei 60 °C statt, bis ein NCO-Gehalt von 8,5 Gew.-% erreicht wurde. Ein praktisch farbloses, klares NCO-terminiertes Prepolymer mit folgenden Kenndaten wurde erhalten:

| | |
|---|---|
| NCO-Gehalt: | 8,5 Gew.-% |
| Festkörperanteil: | 50 Gew.-% |
| Viskosität | 110 mPa·s |

### Beispiel 7 (erfindungsgemäß)

5,28 g des Produktes aus Beispiel 2 wurden mit 1,08 g 1,1,1-Trimethylolpropan, 50 Gew.-% in MPA gelöst, in Gegenwart des Addocat 201 (0,03 Gew.-%) umgesetzt. Nachdem ein NCO-Gehalt von kleiner als 0,1 Gew.-% gemessen wurde, wurden 29,3 g Polyisocyanat 1 hinzugegeben. Das Reaktionsgemisch wurde auf einen Festkörperanteil von 50 Gew.-% mit MPA eingestellt. Die Reaktion fand unter Rühren bei 60 °C statt, bis ein NCO-Gehalt von 8,48 Gew.-% erreicht wurde. Ein praktisch farbloses, klares NCO-terminiertes Prepolymer mit folgenden Kenndaten wurde erhalten:

| | |
|---|---|
| NCO-Gehalt: | 8,48 Gew.-% |
| Festkörperanteil: | 50 Gew.-% |
| Viskosität | 175 mPa·s |

### Beispiel 8 (erfindungsgemäß)

5,28 g des Produktes aus Beispiel 2 wurden mit 1,08 g 1,1,1-Trimethylolpropan, 50 Gew.-% in MPA gelöst, in Gegenwart des Addocat 201 (0,03 Gew.-%) umgesetzt. Nachdem ein NCO-Gehalt von kleiner als 0,1 Gew.-% gemessen wurde, wurden 32.8 g Polyisocyanat 5 hinzugegeben, und das Reaktionsgemisch auf einen Festkörperanteil von 50 Gew.-% mit MPA eingestellt. Die Reaktion fand unter Rühren bei 60 °C statt bis ein NCO-Gehalt von 6,75 Gew.-% erreicht wurde. Ein praktisch farbloses, klares NCO-terminiertes Prepolymer mit folgenden Kenndaten wurde erhalten:

| | |
|---|---|
| NCO-Gehalt: | 6,75 Gew.-& |
| Festkörperanteil: | 50 Gew.-% |
| Viskosität | 145 mPa·s |

### Beispiel 9 (erfindungsgemäß)

11,02 g des Produktes aus Beispiel 2 wurden mit 2,24 g 1,1,1-Trimethylolpropan, 50 Gew.-% in MPA gelöst, in Gegenwart des Addocat 201 (0,03 Gew.-%) umgesetzt. Nachdem ein NCO-Gehalt von kleiner 0,1 Gew.-% gemessen wurde, wurden 120 g Polyisocyanat 4 hinzugegeben, und das Reaktionsgemisch auf einen Festkörperanteil von 50 Gew.-% mit MPA eingestellt. Die Reaktion fand unter Rühren bei 60 °C statt, bis ein NCO-Gehalt von 6,48 Gew.-% erreicht wurde. Ein praktisch farbloses, klares NCO-terminiertes Prepolymer mit folgenden Kenndaten wurde erhalten:

| | |
|---|---|
| NCO-Gehalt: | 6.48 Gew.-% |
| Festkörperanteil: | 50 Gew.-% |
| Viskosität | 180 mPa·s |

### Beispiel 10 (erfindungsgemäß)

11,02 g des Produktes aus Beispiel 2 wurden mit 108 g Polyol 2, 50 Gew.-% in MPA gelöst, in Gegenwart des Addocat 201 (0,03 Gew.-%) umgesetzt. Nachdem ein NCO-Gehalt von kleiner als 0,1 Gew.-% gemessen wurde, wurden 120 g Polyisocyanat 4 hinzugegeben, und das Reaktionsgemisch auf einen Festkörperanteil von 50 Gew.-% mit MPA eingestellt. Die Reaktion fand unter Rühren bei 60 °C statt, bis ein NCO-Gehalt von 5,71 Gew.-% erreicht wurde. Ein praktisch farbloses, klares NCO-terminiertes Prepolymer mit folgenden Kenndaten wurde erhalten:

| | |
|---|---|
| NCO-Gehalt: | 5,71 Gew.-% |
| Festkörperanteil: | 50 Gew.-% |
| Viskosität | 30 mPa·s |

### Beispiel 11 (erfindungsgemäß)

11,02 g des Produktes aus Beispiel 2 wurden mit 40,5 g Polyol 3, 50 Gew.-% in MPA gelöst, in Gegenwart des Addocat 201 (0,03 Gew.-%) umgesetzt. Nachdem ein NCO-Gehalt von kleiner als 0,1 Gew.-% gemessen wurde, wurden 120 g Polyisocyanat 4 hinzugegeben, und das Reaktionsgemisch auf einen Festkörperanteil von 50 Gew.-% mit MPA eingestellt. Die Reaktion fand unter Rühren bei 60 °C statt, bis ein NCO-Gehalt von 5,96% erreicht wurde. Ein praktisch farbloses, klares NCO-terminiertes Prepolymer mit folgenden Kenndaten wurde erhalten:

| | |
|---|---|
| NCO-Gehalt: | 5,96 Gew.-% |
| Festkörperanteil: | 50 Gew.-% |
| Viskosität | 160 mPa·s |

### Beispiel 12 (erfindungsgemäß)

6,76 g des Produktes aus Beispiel 1 wurden mit 1,49 g 1,1,1-Trimethylolpropan, 50 Gew.-% in MPA gelöst, in Gegenwart des Addocat 201 (0,03 Gew.-%) umgesetzt. Nachdem ein NCO-Gehalt von kleiner 0,1 Gew.-% gemessen wurde, wurden 44,9 g Polyisocyanat 5 hinzugegeben, und das Reaktionsgemisch auf einen Festkörperanteil von 50 Gew.-% mit MPA eingestellt. Die Reaktion fand unter Rühren bei 60 °C statt, bis ein NCO-Gehalt von 7,82 Gew.-% erreicht wurde. Ein praktisch farbloses, klares, NCO-terminiertes Prepolymer mit folgenden Kenndaten wurde erhalten:

| | |
|---|---|
| NCO-Gehalt: | 7,82 Gew.-% |
| Festkörperanteil: | 50,0 Gew.-% |
| Viskosität | 115 mPa·s |

### Beispiel 13 (erfindungsgemäß)

6,76 g des Produktes aus Beispiel 1 wurden mit 27,0 g Polyol 3 BA, 50 Gew.-% in MPA gelöst, in Gegenwart des Addocat 201 (0,03 Gew.-%) umgesetzt. Nachdem ein NCO-Gehalt von kleiner 0,1 Gew.-% gemessen wurde, wurden 44,9 g Polyisocyanat 5 hinzugegeben, und das Reaktionsgemisch auf einen Festkörperanteil von 50 Gew.-% mit MPA eingestellt. Die Reaktion fand unter Rühren bei 60 °C statt, bis ein NCO-Gehalt von 5,84 Gew.-% erreicht wurde. Ein praktisch farbloses, klares, NCO-terminiertes Prepolymer mit folgenden Kenndaten wurde erhalten:

| | |
|---|---|
| NCO-Gehalt: | 5,84 Gew.-% |
| Festkörperanteil: | 50 Gew.-% |
| Viskosität | 100 mPa·s |

### Beispiel 14 (erfindungsgemäß)

6,76 g des Produktes aus Beispiel 1 wurden mit 7,17 g Polyol 2 g 50 Gew.-% in MPA in Gegenwart des Addocat 201 umgesetzt. Nachdem ein NCO-Gehalt von kleiner als 0,1 Gew.-% gemessen wurde, wurden 44,9 g Polyisocyanat 5 (0,03 Gew.-%) hinzugegeben, und das Reaktionsgemisch auf einen Festkörperanteil von 50 Gew.-% mit MPA eingestellt. Die Reaktion fand unter Rühren bei 60 °C statt, bis ein NCO-Gehalt von 7,14 Gew.-% erreicht wurde. Ein praktisch farbloses, klares NCO-terminiertes Prepolymer mit folgenden Kenndaten wurde erhalten:

| | |
|---|---|
| NCO-Gehalt: | 7,14 Gew.-% |
| Festkörperanteil: | 50 Gew.-% |
| Viskosität | 70 mPa·s |

### Beispiel 15 (erfindungsgemäß)

6,09 g des Produktes aus Beispiel 1 wurden mit 24,3 g Polyisocyanat 3 g 50 Gew.-% in MPA in Gegenwart des Addocat 201 (0,03 Gew.-%) umgesetzt. Nachdem ein NCO-Gehalt von kleiner als 0,1 Gew.-% gemessen wurde, wurden 38,6 g Polyisocyanat 2 hinzugegeben, und das Reaktionsgemisch auf einen Festkörperanteil von 50 Gew.-% mit MPA eingestellt. Die Reaktion fand unter Rühren bei 60 °C statt, bis ein NCO-Gehalt von 6,75 Gew.-% erreicht wurde. Ein praktisch farbloses, klares NCO-terminiertes Prepolymer mit folgenden Kenndaten wurde erhalten:

| | |
|---|---|
| NCO-Gehalt: | 6,75 Gew.-% |
| Festkörperanteil: | 50 Gew.-% |
| Viskosität | 110 mPa·s |

### Beispiel 16 (erfindungsgemäß)

6,09 g des Produktes aus Beispiel 1 wurden mit 1,34 g 1,1,1-Trimethylolpropan, 50 Gew.-% in MPA in Gegenwart des Addocat 201 (0,03 Gew.-%) umgesetzt. Nachdem ein NCO-Gehalt von kleiner als 0,1 Gew.-% gemessen wurde, wurden 38,6 g Polyisocyanat 2 hinzugegeben, und das Reaktionsgemisch auf einen Festkörperanteil von 50 Gew.-% mit MPA eingestellt. Die Reaktion fand unter Rühren bei 60 °C statt, bis ein NCO-Gehalt von 6,75 Gew.-% erreicht wurde. Ein praktisch farbloses, klares NCO-terminiertes Prepolymer mit folgenden Kenndaten wurde erhalten:

| | |
|---|---|
| NCO-Gehalt: | 6,75 Gew.-% |
| Festkörperanteil: | 50 Gew.-%% |
| Viskosität | 200 mPa·s |

### Beispiel 17 (erfindungsgemäß)

6,09 g des Produktes aus Beispiel 1 wurden mit 6,45 g Polyol 2 in 50 Gew.-% MPA in Gegenwart des Addocat 201 (0,03 Gew.-%) umgesetzt. Nachdem ein NCO-Gehalt von kleiner als 0,1 Gew.-% gemessen wurde, wurden 38,6 g Polyisocyanat 2 hinzugegeben, und das Reaktionsgemisch auf einen Festkörperanteil von 50 Gew.-% mit MPA eingestellt. Die Reaktion fand unter Rühren bei 60 °C statt, bis ein NCO-Gehalt von 6,75 Gew.-%% erreicht wurde. Ein praktisch farbloses, klares NCO-terminiertes Prepolymer mit folgenden Kenndaten wurde erhalten:

| | |
|---|---|
| NCO-Gehalt: | 6,75 Gew.-% |
| Festkörperanteil: | 50 Gew.-% |
| Viskosität | 90 mPa·s |

### Beispiel 17 (erfindungsgemäß)

12,63 des Produktes aus Beispiel 1 wurden mit 16,56 g Amin 1 und bei RT für 8 h gerührt. Anschließend wurden 77,20 g Polyisocyanat 2 hinzugegeben und ebenfalls bei RT für 8 h gerührt. Ein praktisch farbloses, klares NCO-terminiertes Prepolymer mit folgenden Kenndaten wurde erhalten:

| | |
|---|---|
| NCO-Gehalt: | 7,01 (Gew.-% |
| Festkörperanteil: | 50 Gew.-% |
| Viskosität | 100 mPa·s |

### Anwendungsbeispiele:

In Tabelle 1 sind verschiedene Lacksysteme dargestellt. Die Komponenten der Lackformulierungen wurden miteinander vermischt und mittels Spritzapplikationsverfahren auf Glas und Basislack (Mehrschichtaufbau) aufgetragen. Die lackierten Probenkörper werden 30 min bei 60 °C getrocknet.

### Tabelle 1.

**Tabelle 1: die Formulierung wurden spritzappliziert und bei 60 °C, 30 min eingebrannt. Alle analytischen Werte wurden nach 7d bestimmt.**

| | | Lack 1 | Lack 2 | Lack 3 | Lack 4 | Lack 5 | Lack 6 | Lack 7 (Vgl.) | Lack 8 (Vgl.) | Lack 9 (Vgl.) |
|---|---|---|---|---|---|---|---|---|---|---|
| Produkt | Feststoffgehalt [%] | Einwaage [g] | Einwaage [g] | Einwaage [g] | Einwaage [g] | Einwaage [g] | Einwaage [g] | Einwaage [g] | Einwaage [g] | Einwaage [g] |
| Polyol 7 | 70 | 48,33 | 48,33 | 47,96 | 47,96 | 48,37 | 48,37 | 49,21 | 49,21 | 47,82 |
| Byk 141 | 96,8 | 0,25 | - | 0,25 | - | 0,25 | - | 0,25 | - | 0,25 |
| Byk 331 | 10 | 1,50 | - | 1,50 | - | 1,50 | - | 1,50 | - | 1,50 |
| Tinuvin 292 | 50 | 1,00 | 1,00 | 1,00 | 1,00 | 1,00 | 1,00 | 1,00 | 1,00 | 1,00 |
| Tinuvin 1130 | 50 | 2,00 | 2,00 | 2,00 | 2,00 | 2,00 | 2,00 | 2,00 | 2,00 | 2,00 |
| Addocat 201 | 1 | 1,50 | 1,50 | 1,50 | 1,50 | 1,50 | 1,50 | 1,50 | 1,50 | 1,5 |
| Butylacetat | 0 | 10,60 | 10,60 | 10,09 | 10,09 | 9,95 | 9,95 | 11,08 | 11,08 | 11,23 |
| MPA | 0 | 6,44 | 6,44 | 6,15 | 6,15 | 6,06 | 6,06 | 6,74 | 6,74 | 6,86 |
| Xylol | 0 | 10,60 | 10,60 | 10,09 | 10,09 | 9,95 | 9,95 | 11,08 | 11,08 | 11,23 |
| Beispiel 3 | 50 | - | - | - | - | - | - | - | - | 2,39 |
| Beispiel 4 | 50 | 3,07 | 3,07 | - | - | - | - | - | - | |
| Beispiel 5 | 50 | - | - | 5,91 | 5,91 | - | - | - | - | |
| Beispiel 6 | 50 | - | - | - | - | 6,39 | 6,39 | - | - | |
| Polyisocyanat 1 | 100 | 14,71 | 14,71 | 13,55 | 13,55 | 13,03 | 13,03 | 15,63 | 15,63 | 14,11 |

| | | | | | | | | | | |
|---|---|---|---|---|---|---|---|---|---|---|
| Vgl. = Vergleichsbeispiel | | | | | | | | | | |

Für die verschiedenen Lackformulierungen wurde nach der Spritzapplikation der Kontaktwinkel gegen H₂O bestimmt. Für Lack 1 (mit Verlaufsmittel) im Vergleich zu Lack 2 (ohne Verlaufsmittel) wird hier beispielhaft gezeigt, dass die verwendeten Silikon-haltigen Verlaufsmittel keinen Einfluss auf den Kontaktwinkel haben, denn die Werte liegen in einer Größenordnung (97 ° bzw. 100 °) und sind damit vergleichbar. Für Lack 1 bis Lack 5 wurde gezeigt, dass die Zugabe von NCO-terminierten Präpolymeren, die Siloxanketten enthalten, eine Steigerung des Kontaktwinkels erzielt werden kann, ohne gängige Lackparameter wie Glanz zu beeinflussen.

Zudem wird nur eine geringe Schwankung des Kontaktwinkels nach Trockenverkratzung und überraschenderweise im Kondenswassertest (SWT) beobachtet. Die gefundenen Ergebnisse unterscheiden sich deutlich von den Vergleichen Lack 8 und Lack 9, die keine NCO-terminierten, siloxanenthaltenden Präpolymere enthalten; sie weisen einen um ca 20 ° niedrigen Kontaktwinkel auf. Vergleichsbeispiel Lack 9 enthält auch Siloxan-terminiertes Präpolymer, welches jedoch eine andere Zusammensetzung aufweist. Als folgende wird eine Abnahme des Kontaktwinkels im Schwitzwassertest beobachtet.

**Tabelle 2: Bestimmung des Kontaktwinkels von verschiedenen Klarlacken vor und nach Belastung durch Verkratzung und Kondenswassertest (SWT).**

| Kontaktwinkel H₂O [°] | Lack 1^{[1]} | Lack 2 | Lack 3^{[1]} | Lack 5^{[1]} | Lack 7^{[1]} (Vgl) | Lack 8 (Vgl.) | Lack 9 (Vgl.) |
|---|---|---|---|---|---|---|---|
| Basecoat (vorher) | 97 | 100 | 96 | 96 | 83 | 80 | 101 |
| Nach PP und Reflow (2h 60°C) | 94 | 93 | 95 | 94 | 82 | 80 | - |
| Nach SWT^{[2]} | 97 | 95 | 96 | 95 | 73 | 74 | 91^{[3]} |
| Δ | 0 | 5 | 0 | 3 | 30 | 6 | 10 |

| | | | | | | | |
|---|---|---|---|---|---|---|---|
| [1] mit Verlaufsmittel. [2] SWT = Kondenswassertest. | | | | | | | |

Überraschenderweise wurde beobachtet, dass die siloxanhaltigen Beschichtungen gegenüber den Vergleichsbeispielen einen besseren Reflow aufweisen. Dies soll beispielhaft an Lack 3 gegenüber Lack 7 erläutert werden. Nach Trockenverkratzung fällt - von gleichem Ausgangswert - für beide Klarlacke der Glanz auf ca. 11 Glanzeinheiten ab. Nach Reflow wird für Lack 3 ein Wert von 87 Glanzeinheiten erhalten, wohingegen für Lack 7 nur 77 Glanzeinheiten beobachtet werden.

**Tabelle 3: Trockenverkratzung mittels Hammer verschiedener Lacksysteme. Reflow: 2h, 60 °C. Alle Lacksysteme enthalten Verlaufsmittel.**

| Trockenverkratzung mit Hammer | Lack 1 | Lack 3 | Lack 5 | Lack 7 | Lack 9 |
|---|---|---|---|---|---|
| | | | | | |
| Glanz 20° vorher | 91,1 | 91,1 | 91,4 | 91,4 | 89,6 |
| Glanz 20° nachher | 11,2 | 11,5 | 11,5 | 11,0 | 9,9 |
| Restglanz nach PP [%] | 12,3 | 12,6 | 12,6 | 12,0 | 11,0 |
| Glanz 20° Reflow | 86,1 | 87,3 | 85,8 | 70,4 | 77.3 |
| Restglanz nach Reflow [%] | 94,5 | 95,8 | 93,9 | 77,0 | 86.3 |

In Tabelle 4 wurden Lacksysteme verglichen, die alle Verlaufsadditive enthalten. Auch hier ist deutlich zu erkennen, dass die Siloxan-haltigen Systeme einen deutlichen besseren Restglanz und Reflow aufweisen (z.B. Lack 6 vs. Lack 8).

**Tabelle 4: Trockenverkratzung mittels Crockmeter von verschiedenen Lacksystemen. Reflow: 2h, 60 °C. Alle Lacksysteme enthalten keine Verlaufsmittel.**

| Trockenverkratzung mittels Crockmeter | Lack 2 | Lack 4 | Lack 6 | Lack 8 |
|---|---|---|---|---|
| Glanz 20° vorher | 91 | 91 | 91 | 92 |
| Glanz 20° nachher | 42 | 34 | 38 | 15 |
| Restglanz nach PP [%] | 46 | 37 | 42 | 16 |
| Glanz 20° Reflow | 81 | 69 | 63 | 29 |
| Restglanz nach Reflow [%] | 89 | 76 | 70 | 46 |

Ein weiterer überraschender, positiver Effekt wurde durch Zugabe der NCO-terminierten Siloxanpräpolymere bezüglich einer verbesserten Optik beobachtet: Die Beschichtung der Standardrezeptur bildet ohne Verlaufsadditive eine Orangenhaut der Oberfläche aus. Wurden die erfindungsgemäßen NCO-terminierten Siloxanprepolymere eingesetzt und auf Verlaufsadditive verzichtet, wurde keine Organgenhaut beobachtet. Durch Zugabe der erfindungsgemäßen NCO-terminierten Siloxanprepolymere werden somit für den Klarlack keine Additive benötigt, wobei gleichzeitig keine Organgenhaut ausgebildet wird.

Des Weiteren wurde die Verträglichkeit der NCO-terminierten Polysiloxanprepolymere untersucht. Dies wird exemplarisch an der Formulierung aus Tabelle 5 verdeutlich.

**Tabelle 5: Lackformulierungen mit erhöhtem NCO-terminierten Siloxangehalt.**

| | Lack 10 | Lack 11 | Lack 12 |
|---|---|---|---|
| PIC / NCO-Siloxan (Bindemittel fest-auf-fest) | 8:2 | 7:3 | 6:4 |
| Polyol 7 | 50.86 | 47.54 | 44.23 |
| Tinuvin 292 | 1.08 | 1.04 | 0.99 |
| Tinuvin 1130 | 2.16 | 2.08 | 1.98 |
| Addocat 201 | 1.62 | 1.55 | 1.38 |
| BA / MPA / XY | 33.28 | 29.27 | 27.51 |
| Beispiel 4 | 7.40 | 11.10 | 14.80 |
| Polyisocyanat 1 | 14.80 | 12.95 | 11.10 |
| Festkörper (%) | *50%* | *50%* | *50%* |

Wie in Tabelle 6 dargestellt, konnten die neuen Lackrohstoffe über einen breiten Konzentrationsbereich eingesetzt werden.

**Tabelle 6: Spritzlackierung von Lack 10 und Lack 11**

| | Lack 10 | Lack 11 | Lack 12 |
|---|---|---|---|
| Optische Eigenschaften | Klar | Klar | Klar |
| Spritzoptik | Glatt | Glatt | Glatt |
| Glanz (20 ° / 60 °) | 91 /94 | 92 / 95 | 90 / 94 |
| Haze | 11 | 11 | 10 |
| Lösemittelbeständigkeiten Xy-MPA-EA-Ac (5 min.) | 2 2 4 4 | 2 2 4 4 | 2 2 4 4 |

Im folgenden Beispiel wurden die Eignung der neuen Siloxan-haltigen Lackrohstoffe in Wasserlacken untersucht. In Tabelle 7 finden sich die entsprechen Formulierungen.

**Tabelle 7: 2K-Wasserlacke für Softfeel-Beschichtungen**

| | | Lack 13 (Vgl.) | Lack 14 |
|---|---|---|---|
| Produkt | Feststoffgehalt [%] | Einwaage [g] | Einwaage [g] |
| Polyol 5 | 52 | 25 | 25 |
| Polyol 6 | 42 | 31 | 31 |
| dest. Wasser | 0 | 13,7 | 13,7 |
| Lucrafoam DNE 01 | 100 | 0,2 | 0,2 |
| Tego-Wet KL 245 | 50 | 0,4 | 0,4 |
| Byk 348 | 100 | 0,6 | 0,6 |
| Aquacer 513 | 35 | 1,7 | 1,7 |
| Decosoft Transparent 7 D | 100 | 7,7 | 7,7 |
| Matting agent Acematt 3300 | 100 | 3,1 | 3,1 |
| Polyisocyanat 5 | 100 | 4,98 | 4,98 |
| Beispiel 4 | 50 | - | 1,87 |
| Polyisocyanat 1 | 100 | 11,62 | 11,62 |

In diesen Studien wurde die Richtrezeptur identisch beibehalten und mit den neuen hochkompatiblen NCO-terminierten Siloxanen ergänzend versetzt. Die Versuche zeigten, dass eine identische matte Lackoptik erhalten wurde. Die Kontaktwinkelmessungen zeigten, dass der Kontaktwinkel von 90 ° auf 110 ° gesteigert werden konnte.

**Tabelle 8: Wasserlacke wurde mittels Spritzapplikation aufgetragen,, Substrat Glas.**

| | Lack 13 (Vgl.) | Lack 14 |
|---|---|---|
| Filmoptik | Matt wie Lack 14 | Matt wie Lack 13 |
| Kontaktwinkel H₂O [°] | 89,6 | 111 |

## Patentansprüche

1. NCO-terminierte Polysiloxanprepolymer der allgemeinen Formel (I)
[(Q)q]-[(M)ₘ-(P)ₚ-(R)ᵣ]ₜ (I),
worin R, P, M, Q, r, p, m, q und t die folgenden Bedeutungen haben
R jeweils unabhängig voneinander mindestens eine Polyisocyanat-Einheit und/oder mindestens eine Diisocyanat-Einheit,
P jeweils unabhängig voneinander mindestens eine Polyol-Einheit,
M jeweils unabhängig voneinander mindestens eine Diisocyanat-Einheit und/oder mindestens eine Polyisocyanat-Einheit,
Q mindestens eine Polysiloxan-Einheit,
r jeweils unabhängig voneinander Zahl von 1 bis 10,
p jeweils unabhängig voneinander Zahl von 1 bis 10,
m jeweils unabhängig voneinander Zahl von 1 bis 10,
q jeweils unabhängig voneinander Zahl von 1 bis 10,
t ganze Zahl von 2 bis 5, und
die vorhandenen Einheiten M direkt an die Einheit Q angebunden sind.

2. Polysiloxanprepolymer gemäß Anspruch 1, **dadurch gekennzeichnet, dass** die mindestens eine Polyisocyanat-Einheit R ausgewählt ist aus der Gruppe bestehend aus Triisocyanaten wie 3,5,5-Tri-methyl-1-isocyanato-3-isocyanatomethylcyclohexan oder, bevorzugt höhermolekularen, Oligomeren mit Biuret-, Uretdion-, Isocyanurat-, Iminooxadiazindion-, Allophanat-, Urethanund/oder Carbodiimid/Uretonimin-Struktureinheiten erhältlich durch Umsetzung von Di- oder Triisocyanaten ausgewählt aus der Gruppe bestehend aus 1,4-Butandiisocyanat, 1,5-Pentandiisocyanat (Pentamethylendiisocyanat, PDI), 1,6-Hexandiisocyanat (Hexamethylendiisocyanat, HDI), 4-Isocyanatomethyl-1,8-octandiisocyanat (Triisocyanatononan, TIN), 4,4'-Methylenbis(cyclohexylisocyanat) (H12MDI), 3,5,5-Trimethyl-1-isocyanato-3-isocyanatomethylcyclohexan (Isophorondiisocyanat, IPDI), 1,3- sowie 1,4-Bis(isocyanatomethyl)cyclohexan (H6XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3- und/oder 1,4-Bis(isocyanatomethyl)benzol (XDI), 3,3'-Dimethyl-4,4'-biphenyldiisocyanat (TODI), 1,4-Paraphenylendiisocyanat (PPDI), Cyclohexyldiisocyanat (CHDI) und Mischungen davon.

3. Polysiloxanprepolymer gemäß Anspruch 1 oder 2, **dadurch gekennzeichnet, dass** die mindestens ein Polyol-Einheit P ausgewählt ist aus der Gruppe bestehend aus Polyetherpolyolen, Polyesterpolyolen, Polyurethanpolyolen, Polysiloxanpolyolen, Polycarbonatpolyolen, Polybutadienpolyolen, Polyacrylatpolyolen, Polymethacrylatpolyolen, Mischpolymerisaten von Polyacrylatpolyolen und Polymethacrylatpolyolen und Mischungen davon.

4. Polysiloxanprepolymer gemäß einem der Ansprüche 1 bis 3, **dadurch gekennzeichnet, dass** M mindestens eine Diisocyanat-Einheit ist ausgewählt aus der Gruppe bestehend aus 1,4-Butandiisocyanat, 1,5-Pentandiisocyanat (Pentamethylendiisocyanat, PDI), 1,6-Hexandiisocyanat (Hexamethylendiisocyanat, HDI), 4,4'-Methylenbis(cyclohexylisocyanat) (H12MDI), 3,5,5-Tri-methyl-1-isocyanato-3-isocyanatomethylcyclohexan (Isophorondiisocyanat, IPDI), 1,3- sowie 1,4-Bis(isocyanatomethyl)cyclohexan (H6XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3- und/oder 1,4-Bis(isocyanatomethyl)benzol (XDI), 3,3'-Dimethyl-4,4'-biphenyldiisocyanat (TODI), 1,4-Paraphenylendiisocyanat (PPDI) sowie Cyclohexyldiisocyanat (CHDI) und Mischungen davon.

5. Polysiloxanprepolymer gemäß einem der Ansprüche 1 bis 4, **dadurch gekennzeichnet, dass** sich die mindestens eine Polysiloxan-Einheit Q von einem Polysiloxanpolyol, einem Polysiloxanpolyamin oder einem Polysiloxanpolythiol, insbesondere einem Polysiloxanpolyol, ableitet.

6. Polysiloxanprepolymer gemäß einem der Ansprüche 1 bis 5, **dadurch gekennzeichnet, dass** die mindestens eine Polysiloxaneinheit in einer Menge von 0,1 bis 5 Gew.-%, bezogen auf das gesamte Polysiloxanprepolymer, vorliegt.

7. Polysiloxanprepolymer gemäß einem der Ansprüche 1 bis 6, **dadurch gekennzeichnet, dass** das Polysiloxanprepolymer ein zahlenmittleres Molekulargewicht Mn, bestimmt nach den in der Beschreibung angegeben Methoden, von < 4000 g/mol, bevorzugt von > 450 g/mol und < 3000 g/mol, besonders bevorzugt von > 650 g/mol und < 2500 g/mol und ganz besonders bevorzugt von > 800 g/mol und < 2500 g/mol, aufweist.

8. Verfahren zur Herstellung NCO-terminierten Polysiloxanprepolymers gemäß einem der Ansprüche 1 bis 7, mindestens umfassend die folgenden Schritte:
(A) Umsetzung mindestens eines Polysiloxanpolyols, Polysiloxanpolyamins und/oder Polysiloxanpolythiols mit mindestens einem Diisocyanat und/oder mindestens einem Polyisocyanat, um mindestens ein NCO-terminiertes Polysiloxan zu erhalten,
(B) gegebenenfalls Entfernen von überschüssigem mindestens einen Diisocyanat und/oder mindestens einem Polyisocyanat,
(C) Umsetzung des mindestens einen NCO-terminierten Polysiloxans aus Schritt (A) oder (B) mit mindestens einem Polyol,
(D) Umsetzung des in Schritt (C) erhaltenen Produkts mit mindestens einem Diisocyanat oder mindestens einem Polyisocyanat, um das NCO-terminierte Polysiloxanprepolymer zu erhalten.

9. Verfahren gemäß Anspruch 8, **dadurch gekennzeichnet, dass** Schritt (B) durch Dünnschichtverdampfung, Phasenseparation, Ausfällung oder Kombinationen davon erfolgt.

10. Verfahren gemäß Anspruch 8 oder 9, **dadurch gekennzeichnet, dass** nach Schritt (B) der Gehalt mindestens einem Diisocyanat oder mindestens einem Polyisocyanat, bevorzugt mindestens einem Diisocyanat, in der Reaktionsmischung bei höchstens 5 Gew.-%, bevorzugt 1 bis 0,01 Gew.-%, liegt.

11. Formulierung enthaltend mindestens ein NCO-terminiertes Polysiloxanprepolymer gemäß einem der Ansprüche 1 bis 7, bevorzugt in einer Menge von 5 bis 70 Gew.-%, bezogen auf die gesamte Formulierung.

12. Formulierung nach Anspruch 11, **dadurch gekennzeichnet, dass** es sich um eine Lackformulierung, insbesondere eine 2-Komponenten-Formulierung, handelt.

13. Verwendung des NCO-terminierten Polysiloxanprepolymer gemäß einem der Ansprüche 1 bis 7 als Härter in einer Lackformulierung.

## Claims

1. NCO-terminated polysiloxane prepolymers of the general formula (I)
[(Q)_{q}]-[(M)ₘ-(P)ₚ-(R)ᵣ]ₜ (I),
where R, P, M, Q, r, p, m, q, and t are defined as follows
R in each case independently at least one polyisocyanate unit and/or at least one diisocyanate unit,
P in each case independently at least one polyol unit,
M in each case independently at least one diisocyanate unit and/or at least one polyisocyanate unit,
Q at least one polysiloxane unit,
r in each case independently a number from 1 to 10,
p in each case independently a number from 1 to 10,
m in each case independently a number from 1 to 10,
q in each case independently a number from 1 to 10,
t an integer from 2 to 5, and
the units M present are attached directly to the unit Q.

2. Polysiloxane prepolymer according to Claim 1, **characterized in that** the at least one polyisocyanate unit R is selected from the group consisting of triisocyanates such as 3,5,5-trimethyl-1-isocyanato-3-isocyanatomethylcyclohexane or preferably highermolecular-weight oligomers having biuret, uretdione, isocyanurate, iminooxadiazinedione, allophanate, urethane- and/or carbodiimide/uretonimine structural units obtainable through reaction of di- or triisocyanates selected from the group consisting of butane 1,4-diisocyanate, pentane 1,5-diisocyanate (pentamethylene diisocyanate, PDI), hexane 1,6-diisocyanate (hexamethylene diisocyanate, HDI), 4-isocyanatomethyloctane 1,8-diisocyanate (triisocyanatononane, TIN), 4,4'-methylenebis(cyclohexyl isocyanate) (H12MDI), 3,5,5-trimethyl-1-isocyanato-3-isocyanatomethylcyclohexane (isophorone diisocyanate, IPDI), 1,3- and 1,4-bis(isocyanatomethyl)cyclohexane (H6XDI), naphthalene 1,5-diisocyanate, diisocyanatodiphenylmethane (2,2'-, 2,4'-, and 4,4'-MDI or mixtures thereof), diisocyanatomethylbenzene (tolylene 2,4- and 2,6-diisocyanate, TDI) and technical mixtures of the two isomers and also 1,3- and/or 1,4-bis(isocyanatomethyl)benzene (XDI), 3,3'-dimethylbiphenyl 4,4'-diisocyanate (TODI), 1,4-para-phenylene diisocyanate (PPDI), cyclohexyl diisocyanate (CHDI), and mixtures thereof.

3. Polysiloxane prepolymer according to Claim 1 or 2, **characterized in that** the at least one polyol unit P is selected from the group consisting of polyether polyols, polyester polyols, polyurethane polyols, polysiloxane polyols, polycarbonate polyols, polybutadiene polyols, polyacrylate polyols, polymethacrylate polyols, copolymers of polyacrylate polyols and polymethacrylate polyols, and mixtures thereof.

4. Polysiloxane prepolymer according to any of Claims 1 to 3, **characterized in that** M is at least one diisocyanate unit selected from the group consisting of butane 1,4-diisocyanate, pentane 1,5-diisocyanate (pentamethylene diisocyanate, PDI), hexane 1,6-diisocyanate (hexamethylene diisocyanate, HDI), 4,4'-methylenebis(cyclohexyl isocyanate) (H12MDI), 3,5,5-trimethyl-1-isocyanato-3-isocyanatomethylcyclohexane (isophorone diisocyanate, IPDI), 1,3- and 1,4-bis(isocyanatomethyl)cyclohexane (H6XDI), naphthalene 1,5-diisocyanate, diisocyanatodiphenylmethane (2,2'-, 2,4'-, and 4,4'-MDI or mixtures thereof), diisocyanatomethylbenzene (tolylene 2,4- and 2,6-diisocyanate, TDI), and technical mixtures of the two isomers and also 1,3- and/or 1,4-bis(isocyanatomethyl)benzene (XDI), 3,3'-dimethylbiphenyl 4,4'-diisocyanate (TODI), 1,4-para-phenylene diisocyanate (PPDI), and also cyclohexyl diisocyanate (CHDI) and mixtures thereof.

5. Polysiloxane prepolymer according to any of Claims 1 to 4, **characterized in that** the at least one polysiloxane unit Q is derived from a polysiloxane polyol, a polysiloxane polyamine or a polysiloxane polythiol, in particular a polysiloxane polyol.

6. Polysiloxane prepolymer according to any of Claims 1 to 5, **characterized in that** the at least one polysiloxane unit is present in an amount of from 0.1% to 5% by weight based on the total polysiloxane prepolymer.

7. Polysiloxane prepolymer according to any of Claims 1 to 6, **characterized in that** the polysiloxane prepolymer has a number-average molecular weight Mn, determined in accordance with the methods stated in the description, of < 4000 g/mol, preferably of > 450 g/mol and < 3000 g/mol, particularly preferably of > 650 g/mol and < 2500 g/mol, and very particularly preferably of > 800 g/mol and < 2500 g/mol.

8. Process for preparing NCO-terminated polysiloxane prepolymer according to any of Claims 1 to 7, comprising at least the following steps:
(A) reacting at least one polysiloxane polyol, polysiloxane polyamine and/or polysiloxane polythiol with at least one diisocyanate and/or at least one polyisocyanate so as to obtain at least one NCO-terminated polysiloxane,
(B) optionally removing the excess of at least one diisocyanate and/or at least one polyisocyanate,
(C) reacting the at least one NCO-terminated polysiloxane from step (A) or (B) with at least one polyol,
(D) reacting the product obtained in step (C) with at least one diisocyanate or at least one polyisocyanate so as to obtain the NCO-terminated polysiloxane prepolymer.

9. Process according to Claim 8, **characterized in that** step (B) is carried out by thin-film evaporation, phase separation, precipitation or combinations thereof.

10. Process according to Claim 8 or 9, **characterized in that**, after step (B), the content in the reaction mixture of at least one diisocyanate or at least one polyisocyanate, preferably at least one diisocyanate, is not more than 5% by weight, preferably 1% to 0.01% by weight.

11. Formulation comprising at least one NCO-terminated polysiloxane prepolymer according to any of Claims 1 to 7, preferably in an amount of from 5% to 70% by weight based on the entire formulation.

12. Formulation according to Claim 11, **characterized in that** it is a paint formulation, in particular a 2-component formulation.

13. Use of the NCO-terminated polysiloxane prepolymer according to any of Claims 1 to 7 as a curing agent in a paint formulation.

## Revendications

1. Prépolymère de polysiloxane à terminaison NCO de formule générale (I)
[(Q)_{q}]-[(M)ₘ-(P)ₚ-(R)ᵣ]ₜ (I),
dans laquelle R, P, M, Q, r, p, m, q et t ont les significations suivantes :
R représente, chacun indépendamment des autres, au moins un motif polyisocyanate et/ou au moins un motif diisocyanate,
P représente, chacun indépendamment des autres, au moins un motif polyol,
M représente, chacun indépendamment des autres, au moins un motif diisocyanate et/ou au moins un motif polyisocyanate,
Q représente au moins un motif polysiloxane,
r représente, chacun indépendamment les uns des autres, un nombre de 1 à 10,
p représente, chacun indépendamment les uns des autres, un nombre de 1 à 10,
m représente, chacun indépendamment les uns des autres, un nombre de 1 à 10,
q représente, chacun indépendamment les uns des autres, un nombre de 1 à 10,
t représente un nombre entier de 2 à 5, et
les motifs présents M sont directement liés au motif Q.

2. Prépolymère de polysiloxane selon la revendication 1, **caractérisé en ce que** l'au moins un motif polyisocyanate R est choisi dans le groupe consistant en les triisocyanates tels que le 3,5,5-triméthyl-1-isocyanato-3-isocyanatométhylcyclohexane ou de préférence les oligomères à masse moléculaire plus élevée comportant des motifs structuraux biuret, uretdione, isocyanurate, iminooxadiazinedione, allophanate, uréthane et/ou carbodiimide/urétonimine, pouvant être obtenus par réaction de di- ou de triisocyanates choisis dans le groupe consistant en le diisocyanato-1,4-butane, le diisocyanato-1,5-pentane (diisocyanate de pentaméthylène, PDI), le diisocyanato-1,6-hexane (diisocyanate d'hexaméthylène, HDI), le diisocyanato-4-isocyanatométhyl-1,8-octane (triisocyanatononane, TIN), le diisocyanato-4,4'-méthylènebis(cyclohexyle) (H12MDI), le 3,5,5-triméthyl-1,1-isocyanato-3-isocyanatométhylcyclohexane (diisocyanate d'isophorone, IPDI), le 1,3- ainsi que le 1,4-bis(isocyanatométhyl)cyclohexane (H6XDI), le diisocyanato-1,5-naphtalène, le diisocyanatodiphénylméthane (2,2'-, 2,4'- et 4,4'-MDI ou les mélanges de ceux-ci), diisocyanatométhylbenzène (diisocyanato-2,4- et 2,6-toluylène, TDI) et les mélanges techniques des deux isomères ainsi que le 1,3-et/ou le 1,4-bis(isocyanatométhyl)benzène (XDI), le diisocyanato-3,3'-diméthyl-4,4'-biphényle (TODI), le diisocyanato-1,4-paraphénylène (PPDI), le diisocyanate de cyclohexyle (CHDI) et les mélanges de ceux-ci.

3. Prépolymère de polysiloxane selon la revendication 1 ou 2, **caractérisé en ce que** l'au moins un motif polyol P est choisi dans le groupe consistant en les polyétherpolyols, les polyesterpolyols, les polyuréthanepolyols, les polysiloxanepolyols, les polycarbonatepolyols, les polybutadiènepolyols, les polyacrylatepolyols, les polyméthacrylatepolyols, les polymères mixtes de polyacrylatepolyols et de polyméthacrylatepolyols et les mélanges de ceux-ci.

4. Prépolymère de polysiloxane selon l'une des revendications 1 à 3, **caractérisé en ce que** M est au moins un motif diisocyanate choisi dans le groupe consistant en le diisocyanato-1,4-butane, le diisocyanato-1,5-pentane (diisocyanate de pentaméthylène, PDI), le diisocyanato-1,6-hexane (diisocyanate d'hexaméthylène, HDI), le diisocyanato-4,4'-méthylènebis(cyclohexyle) (H12MDI), le 3,5,5-triméthyl-1-isocyanato-3-isocyanatométhylcyclohexane (diisocyanate d'isophorone, IPDI), le 1,3- ainsi que le 1,4-bis(isocyanatométhyl)cyclohexane (H6XDI), le diisocyanato-1,5-naphtalène, le diisocyanatodiphénylméthane (2,2'-, 2,4'- et 4,4'-MDI ou les mélanges de ceux-ci), le diisocyanatométhylbenzène (diisocyanato-2,4- et -2,6-toluylène, TDI) et les mélanges techniques des deux isomères, ainsi que le 1,3- et/ou le 1,4-bis(isocyanatométhyl)benzène (XDI), le diisocyanato-3,3'-diméthyl-4,4'-biphényle (TODI), le diisocyanato-1,4-paraphénylène (PPDI), ainsi que le diisocyanate de cyclohexyle (CHDI) et les mélanges de ceux-ci.

5. Prépolymère de polysiloxane selon l'une des revendications 1 à 4, **caractérisé en ce que** l'au moins un motif polysiloxane Q dérive d'un polysiloxanepolyol, d'une polysiloxanepolyamine ou d'un polysiloxanepolythiol, en particulier d'un polysiloxanepolyol.

6. Prépolymère de polysiloxane selon l'une des revendications 1 à 5, **caractérisé en ce que** l'au moins un motif polysiloxane est présent en une quantité de 0,1 à 5 % en poids par rapport au polymère de polysiloxane total.

7. Prépolymère de polysiloxane selon l'une des revendications 1 à 6, **caractérisé en ce que** le polymère de polysiloxane présente une masse moléculaire moyenne en nombre Mn, déterminée par les méthodes indiquées dans la description, de < 4 000 g/mol, de préférence > 450 g/mol et < 3 000 g/mol, d'une manière particulièrement préférée de > 650 g/mol et < 2 500 g/mol et tout spécialement de > 800 g/mol et < 2 500 g/mol.

8. Procédé de fabrication d'un prépolymère de polysiloxane à terminaison NCO selon l'une des revendications 1 à 7, comprenant au moins les étapes suivantes :
(A) réaction d'au moins un polysiloxanepolyol, d'une polysiloxanepolyamine et/ou d'un polysiloxanepolyol avec au moins un diisocyanate et/ou au moins un polyisocyanate, pour obtenir au moins un polysiloxane à terminaison NCO,
(B) éventuellement élimination d'au moins un diisocyanate et/ou d'au moins un polyisocyanate en excès,
(C) réaction de l'au moins un polysiloxane à terminaison NCO de l'étape (A) ou (B) avec au moins un polyol,
(D) réaction du produit obtenu dans l'étape (C) avec au moins un diisocyanate ou au moins un polyisocyanate pour obtenir le prépolymère de polysiloxane à terminaison NCO.

9. Procédé selon la revendication 8, **caractérisé en ce que** l'étape (B) est mise en œuvre par évaporation sur couche mince, séparation des phases, précipitation ou par combinaison de ces techniques.

10. Procédé selon la revendication 8 ou 9, **caractérisé en ce qu'**après l'étape (B), la teneur du mélange réactionnel en l'au moins un diisocyanate ou l'au moins un polyisocyanate, de préférence en l'au moins un diisocyanate, est au plus de 5 % en poids, de préférence de 1 à 0,01 % en poids.

11. Formulation contenant au moins un prépolymère de polysiloxane à terminaison NCO selon l'une des revendications 1 à 7, de préférence en une quantité de 5 à 70 % en poids par rapport à la formulation totale.

12. Formulation selon la revendication 11, **caractérisée en ce qu'**il s'agit d'une formulation de peinture, en particulier d'une formulation bicomposant.

13. Utilisation du prépolymère de polysiloxane à terminaison NCO selon l'une des revendications 1 à 7 comme durcisseur dans une formulation de peinture.
